# EUROPÄISCHE PATENTSCHRIFT

(11) **EP 2 188 682 B1**
(45) Veröffentlichungstag und Bekanntmachung des Hinweises auf die Patenterteilung: **24.12.2014**
(21) Anmeldenummer: 08803919.3
(22) Anmeldetag: 09.09.2008
(51) Int. Cl.: G05B 19/409

(54) **WERKZEUGMASCHINE**
MACHINE TOOL
MACHINE-OUTIL

(30) Priorität: 14.09.2007 DE 102007045594; 17.09.2007 DE 102007045620
(43) Veröffentlichungstag der Anmeldung: 26.05.2010
(60) Teilanmeldung: 13171097.2
(73) Patentinhaber: Index-Werke GmbH & Co. KG Hahn & Tessky, 73730 Esslingen (DE)
(72) Erfinder: BECK, Eberhard, 73773 Aichwald (DE)
(74) Vertreter: Hoeger, Stellrecht & Partner Patentanwälte
(86) Internationale Anmeldenummer: PCT/EP2008/061951
(87) Internationale Veröffentlichungsnummer: WO 2009/037154

(56) Entgegenhaltungen:
- EP-A- 0 902 343
- EP-A- 1 526 421
- EP-A- 1 762 919
- DE-A1- 3 318 512
- DE-A1- 10 114 811
- US-A- 6 101 425
- "Bedienungsanleitung: SINUMERIK 840 C - Softwarestand 6 - OEM-Variante Windows" 20010101, Bd. 2001, Nr. 9, 1. Januar 2001 (2001-01-01), Seiten 1-302, XP009100494
- "CNC-Programmiersystem NC-Pilot" 20020101, 1. Januar 2002 (2002-01-01), Seiten 1-25, XP009100471
- DENKENA B ET AL: "Fertigungstechnik, Simulation Simulationsmodul für Maschinendynamik im Rahmen eines Fertigungssimulationssystems//Simulation module for machine tool dynamics within the scope of a production simulation system" WERKSTATTSTECHNIK, SPRINGER VERLAG. BERLIN, DE, Bd. 92, Nr. 5, 1. Januar 2002 (2002-01-01), Seiten 223-225, XP009100480 ISSN: 0340-4544
- YINGXUE YAO ET AL: "Web-based virtual machining and measuring cell" COMPUTER SUPPORTED COOPERATIVE WORK IN DESIGN, 2005. PROCEEDINGS OF TH E NINTH INTERNATIONAL CONFERENCE ON COVENTRY, UK MAY 24-26, 2005, PISCATAWAY, NJ, USA,IEEE, Bd. 2, 24. Mai 2005 (2005-05-24), Seiten 673-678, XP010832981 ISBN: 978-1-84600-002-7
- QIN S F ET AL: "Development of a novel 3D simulation modelling system for distributed manufacturing" COMPUTERS IN INDUSTRY, ELSEVIER SCIENCE PUBLISHERS. AMSTERDAM, NL, Bd. 54, Nr. 1, 1. Mai 2004 (2004-05-01), Seiten 69-81, XP004496451 ISSN: 0166-3615

## Beschreibung

Die Erfindung betrifft eine Werkzeugmaschine zum Bearbeiten von Werkstücken entsprechend einem CNC-Bearbeitungsprogrammkomplex mittels Aktionen mindestens einer Bearbeitungseinheit, umfassend eine Maschinensteuerung, welche mit einem CNC-Sätze des CNC-Bearbeitungsprogrammkomplexes verarbeitenden Steuerungsprogramm Steuerbefehle für Aktionen der mindestens einen Bearbeitungseinheit ermittelt und welche mit diesen Steuerbefehlen über eine Antriebssteuerung einen Antrieb der mindestens einen Bearbeitungseinheit steuert.

Derartige Werkzeugmaschinen sind beispielsweise aus der EP 1 762 919 A2 bekannt. Bei diesen besteht jedoch das Problem, dass die Maschinensteuerung aus Sicherheits- und Gewährleistungsgründen als autarke Einheit arbeiten muss und dass die Maschinensteuerung vor allem nicht dazu ausgebaut werden kann, dass auf dieser die Datenvielfalt zur Verfügung steht, welche üblicherweise an einem unternehmensinternen Arbeitsplatz verfügbar ist, wobei dies bereits daran scheitert, dass die diese Informationen verwaltenden Programme vielfach nicht auf der Maschinensteuerung laufen oder laufen dürfen.

Der Erfindung liegt daher die Aufgabe zugrunde, eine Werkzeugmaschine der gattungsgemäßen Art derart zu verbessern, dass an dieser dem Bediener möglichst viele Informationen zur Verfügung gestellt werden können.

Diese Aufgabe wird bei einer Werkzeugmaschine der eingangs beschriebenen Art erfindungsgemäß dadurch gelöst, dass an der Werkzeugmaschine zusätzlich zur Maschinensteuerung ein Bedienerunterstützungssystem angeordnet ist, dass das Bedienerunterstützungssystem unabhängig von der Maschinensteuerung arbeitet, dass das Bedienerunterstützungssystem als Simulationssystem zur Darstellung von Aktionen von virtuellen Bearbeitungseinheiten einer virtuellen Werkzeugmaschine betreibbar ist, dass das Bedienerunterstützungssystem vorauseilend zur Abarbeitung der CNC-Sätze des CNC-Bearbeitungsprogrammkomplexes in der Maschinensteuerung eine Simulation der Aktionen der virtuellen Bearbeitungseinheiten durch ein Simulationssystem ausführt, welches mit einem Kollisionskennungsprogramm zusammenwirkt und bei Erkennen einer Kollision ein Maschinenstoppsignal auslöst, und dass das Bedienerunterstützungssystem eine Visualisierungseinheit zur Darstellung der Bearbeitungs- und/oder Werkstückinformationen aufweist.

Der Vorteil der erfindungsgemäßen Lösung ist somit darin zu sehen, dass damit einerseits die Maschinensteuerung weiterhin autark und völlig unabhängig von allen übrigen Systemen arbeiten kann, insbesondere auch völlig autark bei der Bearbeitung eines Werkstücks eingesetzt werden kann.

Der Vorteil dieser Lösung ist darin zu sehen, dass durch das mit dem Simulationssystem zusammenwirkende Kollisionserkennungsprogramm die Möglichkeit besteht, parallel zur Abarbeitung der CNC-Sätze durch die Maschinensteuerung der realen Werkzeugmaschine eine Simulation der Abarbeitung des CNC-Bearbeitungsprogrammkomplexes mit Vorauseilung durchzuführen und anhand der Aktionen der virtuellen Bearbeitungseinheiten Kollisionen zu überprüfen und zu erkennen und beim Erkennen einer Kollision das Maschinenstoppsignal auszulösen.

Eine vorteilhafte Lösung sieht vor, dass das Bedienerunterstützungssystem mit einem Datennetzwerk verbunden ist, über welches Bearbeitungs- und/oder Werkstückinformationen zugänglich sind.

Damit hat der Bediener unmittelbar an der Werkzeugmaschine durch das Bedienerunterstützungssystem die Möglichkeit, über das Datennetzwerk sich Bearbeitungs- und/oder Werkstückinformationen zu beschaffen und diese auf der Visualisierungseinheit darzustellen.

Der Vorteil dieser Lösung ist insbesondere darin zu sehen, dass nunmehr unmittelbar an der Werkzeugmaschine für den Bediener Informationen verfügbar sind, die er bislang bei den bekannten Werkzeugmaschinen an den Werkzeugmaschinen nicht zur Verfügung hatte, sondern die es jeweils notwendig gemacht haben, dass der Bediener die Werkzeugmaschine verlässt und an einen mit einem Datennetzwerk verbundenen Arbeitsplatz geht, um sich an diesem die Bearbeitungs- und/oder Werkstückinformationen zu verschaffen.

Mit der erfindungsgemäßen Lösung hat der Bediener somit die Möglichkeit, beispielsweise bei Fertigungsproblemen sich Bearbeitungs- und/oder Werkstückinformationen aus dem Datennetzwerk zu beschaffen und unmittelbar an der Werkzeugmaschine darzustellen, um damit zum Beispiel beim Einrichten der Werkzeugmaschine oder beim Bearbeiten eines Werkstücks, und zwar parallel zum Einrichten oder zum Bearbeiten des Werkstücks zusätzliche Informationen über dieses Werkstück oder über das nächste zu bearbeitende Werkstück zu studieren.

Besonders günstig ist es, wenn über das Netzwerk Werkstückinformationen eines CAM-Systems zugänglich sind.

In vielen Fällen ist es jedoch für den Bediener nicht ausreichend, Werkstückinformationen, insbesondere aus einem CAM-System, zur Verfügung zu haben.

In vielen Fällen ist es auch wünschenswert, an der Werkzeugmaschine Konstruktionsinformationen zur Verfügung zu haben.

Aus diesem Grund ist vorzugsweise vorgesehen, dass über das Datennetzwerk Konstruktionsinformationen zugänglich sind.

Besonders zweckmäßig ist es dabei, wenn über das Datennetzwerk Konstruktionsinformationen eines CAD-Systems zugänglich sind.

Die Vorteile für den Bediener sind noch umfassender, wenn über das Datennetzwerk Produktionsinformationen zugänglich sind.

Für den Bediener ist es ferner von Vorteil, wenn über das Datennetzwerk Auftragsinformationen zugänglich sind.

Im Zusammenhang mit der bisherigen Beschreibung der erfindungsgemäßen Lösung wurde das Datennetzwerk nicht näher spezifiziert.

Vorzugsweise handelt es sich bei einem derartigen Datennetzwerk um ein unternehmensinternes Datennetzwerk, welches somit nicht von externen Personen zugänglich ist.

Hinsichtlich der Anordnung der Visualisierungseinheit an der Werkzeugmaschine wurden bislang keine näheren Angaben gemacht.

So könnte die Visualisierungseinheit an der Werkzeugmaschine auf einer der Maschinensteuereinheit gegenüberliegenden Seite angeordnet sein.

Besonders günstig ist es jedoch, wenn die Visualisierungseinheit an einer Maschinensteuereinheit angeordnet ist, so dass die Visualisierungseinheit und die Maschinensteuereinheit zum Betreiben der Werkzeugmaschine zueinander benachbart positioniert sind.

Um je nach Einsatzzweck der Werkzeugmaschine die Visualisierungseinheit benutzen zu können oder nicht benutzen zu können, ohne dass diese räumlich stört, ist vorzugsweise vorgesehen, dass die Visualisierungseinheit relativ zur Maschinensteuereinheit von einer inaktiven in eine aktive Stellung und umgekehrt bewegbar ist.

Insbesondere ist die Visualisierungseinheit dann optimal geschützt, wenn diese in der inaktiven Stellung im Wesentlichen durch die Maschinensteuereinheit abgedeckt ist.

Ferner ist die Visualisierungseinheit für den Bediener dann optimal zugänglich, wenn die Visualisierungseinheit in der aktiven Stellung im Wesentlichen seitlich der Maschinensteuereinheit der Werkzeugmaschine positionierbar ist.

Dabei ist es für einen Bediener ergonomisch zweckmäßig, wenn die Visualisierungseinheit in eine aktive Stellung bringbar ist, in welcher sie gleichzeitig mit der Maschinensteuereinheit von einer Bedienungsperson beobachtbar ist.

Hinsichtlich des Arbeitens mit einem erfindungsgemäßen Bedienerunterstützungssystem sind die unterschiedlichsten Möglichkeiten denkbar.

Beispielsweise könnte für das Betreiben des Bedienerunterstützungssystems die Bediensteuerung der Maschinensteuerung herangezogen werden, wobei dies wiederum die Arbeit mit dem Bedienerunterstützungssystem und mit der Maschinensteuerung wechselweise beeinträchtigen würde.

Aus diesem Grund ist vorzugsweise vorgesehen, dass das Bedienerunterstützungssystem eine Bediensteuerung umfasst.

Zweckmäßigerweise ist dabei diese Bediensteuerung mit einer Datenverarbeitungseinheit versehen.

Um in einfacher Weise mit dem Datennetzwerk kommunizieren zu können, ist vorzugsweise vorgesehen, dass die Datenverarbeitungseinheit der Bediensteuerung mit dem Datennetzwerk verbunden ist.

Die Bediensteuerung kann dabei grundsätzlich beliebig ausgebildet sein.

Besonders zweckmäßig ist es dabei, wenn der Bediensteuerung eine Bediensteuereinheit zugeordnet ist.

Die Bediensteuereinheit kann dabei eine Bediensteuereinheit sein, die in gleicher Weise ausgebildet ist, wie die Maschinensteuereinheit.

Besonders zweckmäßig ist es jedoch, wenn die Bediensteuereinheit eine virtuelle, auf einer Visualisierungseinheit dargestellte Bediensteuereinheit ist.

Im Falle einer virtuellen Bediensteuereinheit ist zweckmäßigerweise vorgesehen, dass die virtuelle Bediensteuereinheit manuelle Eingabeelemente zeigt, die durch mindestens ein Bedienelement der Visualisierungseinheit, beispielsweise einen Cursor, manuell betätigbar sind.

Grundsätzlich könnte die Bediensteuereinheit des Bedienerunterstützungssystems beliebig ausgebildet und bedienbar sein.

Um die Bedienung des Bedienerunterstützungssystems zu vereinfachen, ist es besonders günstig, wenn die Bediensteuereinheit des Bedienerunterstützungssystems entsprechend der Maschinensteuereinheit bedienbar ist.

Besonders vorteilhaft ist es dabei, wenn auch die Bediensteuereinheit an der Maschinensteuereinheit angeordnet ist.

Zweckmäßigerweise ist dabei die Bediensteuereinheit bewegbar an einem Gehäuse der Maschinensteuereinheit gehalten.

Insbesondere ist es dabei günstig, wenn die Bediensteuereinheit an dem Gehäuse der Maschinensteuereinheit zwischen einer aktiven und einer inaktiven Stellung bewegbar gehalten ist.

Vorzugsweise ist dabei die Bediensteuereinheit so ausgebildet, dass die Bediensteuereinheit in der inaktiven Stellung hinter einem Gehäuse der Maschinensteuereinheit angeordnet ist.

Dabei ist es günstig, wenn die Bediensteuereinheit in der inaktiven Stellung im Wesentlichen durch das Gehäuse der Maschinensteuereinheit zumindest teilweise verdeckt ist.

Besonders günstig ist es, wenn die Bediensteuereinheit durch das Gehäuse im Wesentlichen vollständig verdeckt ist.

Eine besonders günstige Lösung sieht vor, dass die Bediensteuereinheit in die Visualisierungseinheit integriert ist, so dass auf der Visualisierungseinheit sowohl die Bediensteuereinheit als auch beispielsweise die Informationen aus dem Datennetzwerk darstellbar sind.

Im Zusammenhang mit der bisherigen Beschreibung des erfindungsgemäßen Bedienerunterstützungssystems wurden keinerlei Angaben über eine Kommunikation zwischen diesem und der Maschinensteuerung gemacht.

Die Kommunikation könnte beispielsweise über einen austauschbaren Datenträger oder eine zwischen beiden vorgesehene Speichereinheit erfolgen, auf die beide Zugriff haben.

Eine vorteilhafte Lösung sieht jedoch vor, dass zwischen dem Bedienerunterstützungssystem und der Maschinensteuerung CNC-Bearbeitungsprogrammkomplexe austauschbar sind.

Noch vorteilhafter ist es, wenn mit den CNC-Bearbeitungsprogrammkomplexen diesen zugeordneten Daten, wie beispielsweise Werkzeugdaten, zwischen dem Bedienerunterstützungssystem und der Maschinensteuerung austauschbar sind.

Darüber hinaus sieht eine vorteilhafte Lösung vor, dass zwischen dem Bedienerunterstützungssystem und der Maschinensteuerung eine Schnittstelle existiert, über welche zumindest teilweise bearbeitete CNC-Sätze austauschbar sind.

Eine derartige Schnittstelle erleichtert es, beispielsweise parallele Simulationen sowohl auf dem Bedienerunterstützungssystem als auch auf der Maschinensteuerung durchzuführen.

Insbesondere ist es dabei günstig, wenn über die Schnittstelle zwischen der Maschinensteuerung und dem Bedienerunterstützungssystem Ergebnisse der rechnerischen Bearbeitung von CNC-Sätzen im Kernsteuerungsprogramm austauschbar sind, so dass damit die Möglichkeit besteht, aus den bereits im Kernsteuerungsprogramm bearbeiteten CNC-Sätzen Daten zu kopieren und auszutauschen.

Besonders günstig ist es, wenn der Datenaustausch zwischen dem Kernsteuerungsprogramm der Maschinensteuerung und dem Kernsteuerungsprogramm des Bedienerunterstützungssystems erfolgt, so dass in der Aktionssteuerung eine unmittelbare Weiterbearbeitung, ebenfalls beispielsweise mit einem dem Kernsteuerungsprogramm der Maschinensteuerung entsprechenden Kernsteuerungsprogramm möglich ist.

Vorzugsweise ist dabei vorgesehen, dass das Bedienerunterstützungssystem mit von der Maschinensteuerung erhaltenen, zumindest teilweise bearbeiteten CNC-Sätzen virtuelle Steuerbefehle ermittelt und die virtuellen Bearbeitungseinheiten steuert.

Um durch eine derartige Schnittstelle keine zeitlichen Verzögerung bei der Übergabe von Daten zu erhalten, ist vorzugsweise vorgesehen, dass die Schnittstelle zwischen dem Bedienerunterstützungssystem und der Maschinensteuerung eine echtzeitfähige Schnittstelle ist, welche somit beispielsweise die teilweise bearbeiteten CNC-Sätze in Echtzeit der Aktionssteuerung des Bedienerunterstützungssystems übergibt.

Zweckmäßigerweise ist dabei das Bedienerunterstützungssystem so ausgebildet, dass es eine Aktionssteuerung umfasst, die mindestens eine Datenverarbeitungseinheit aufweist, welche mit einem CNC-Sätze des CNC-Bearbeitungsprogrammkomplexes verarbeitenden Steuerungsprogramm die Steuerbefehle für Aktionen von virtuellen Bearbeitungseinheiten ermittelt.

Besonders zweckmäßig ist es dabei, wenn das Bedienerunterstützungssystem eine Visualisierungssteuerung umfasst, die eine Datenverarbeitungseinheit aufweist, welche mit einem Visualisierungsprogramm anhand von Konfigurationsdaten eines gespeicherten Maschinenmodells und den von der Aktionssteuerung ermittelten Steuerbefehlen Aktionen der mindestens einen virtuellen Bearbeitungseinheit ermittelt.

Um die Simulation mit genügend Voreilung durchführen zu können, ist vorzugsweise vorgesehen, dass die Simulation der Aktionen der mindestens einen virtuellen Bearbeitungseinheit mindestens einen CNC-Satz, noch besser mindestens zwei CNC-Sätze, relativ zur Maschinensteuerung vorauseilend erfolgt.

Noch vorteilhafter ist es, wenn die Simulation der Aktionen der mindestens einen virtuellen Bearbeitungseinheit mindestens 5 CNC-Sätze vorauseilend zur Abarbeitung der CNC-Sätze des CNC-Bearbeitungsprogrammkomplexes durch die Maschinensteuerung erfolgt.

Dabei ist günstigerweise vorgesehen, dass das Simulationssystem parallel zur Maschinensteuerung arbeitet.

Insbesondere ist vorgesehen, dass die Simulation der Aktionen der mindestens einen virtuellen Bearbeitungseinheit durch Abarbeiten des CNC-Bearbeitungsprogrammkomplexes in der Maschinensteuerung, insbesondere in der Aktionssteuerung, ausgelöst wird.

Diese Lösung hat den großen Vorteil, dass keine separate Bedienung des Simulationssystems erforderlich ist, sondern dass die Abarbeitung des CNC-Bearbeitungsprogrammkomplexes in der Maschinensteuerung selbst die Simulation startet oder auslöst.

Das Auslösen der Simulation könnte durch ein vom Start des Bearbeitungsprogrammkomplexes ausgelöstes Startsignal erfolgen, welches dem Bedienerunterstützungssystem übermittelt wird.

Besonders günstig lassen sich die Maschinensteuerung und die Simulation im Bedienerunterstützungssystem koppeln, wenn die Simulation der Aktionen der mindestens einen virtuellen Bearbeitungseinheit durch das Abarbeiten von CNC-Sätzen in der Aktionssteuerung ausgelöst wird.

Besonders zweckmäßig ist es, wenn die Abarbeitung eines CNC-Satzes durch die Maschinensteuerung eine vorauseilende Abarbeitung dieses CNC-Satzes durch das Simulationssystem auslöst.

Besonders günstig ist es, wenn die Abarbeitung eines CNC-Satzes durch eine Aktionssteuerung der Maschinensteuerung zu teilweise bearbeiteten CNC-Sätzen führt und dass ein derartiger teilweise bearbeiteter CNC-Satz dem Simulationssystem übergeben wird.

Insbesondere ist dabei zur Sicherstellung der vorauseilenden Weiterbearbeitung der CNC-Sätze in dem Simulationssystem vorgesehen, dass die Aktionssteuerung die CNC-Sätze des CNC-Bearbeitungsprogrammkomplexes in einem Vorlauf vorausberechnet und die vorausberechneten CNC-Sätze speichert und dass die vorausberechneten CNC-Sätze spätestens bei ihrer Speicherung dem Simulationssystem übergeben werden.

Ferner ist vorzugsweise vorgesehen, dass das Simulationssystem virtuelle Aktionen der mindestens einen Bearbeitungseinheit schneller, d.h. in kürzerer Zeit, ermittelt als die Aktionssteuerung.

Dies lässt sich beispielsweise dadurch erreichen, dass das Simulationssystem mit verkürzten Zeittakten bei der Abarbeitung der CNC-Sätze gegenüber der Aktionssteuerung, das heißt in einem Override-Modus, arbeitet. Beispielsweise ist dabei vorgesehen, dass das Simulationssystem mit gegenüber der Aktionssteuerung um mindestens einen Faktor 5 schneller ablaufenden Aktionen der Bearbeitungseinheiten arbeitet.

Noch besser ist es, wenn das Simulationssystem mit um mindestens einen Faktor 10 schneller ablaufenden Aktionen der Bearbeitungseinheiten arbeitet.

Eine günstige Lösung sieht vor, dass das Simulationssystem mit um mindestens einen Faktor 20 schneller ablaufenden Aktionen der Bearbeitungseinheiten arbeitet.

Hinsichtlich der Arbeitweise des Kollisionserkennungsprogramms wurden bislang keine näheren Angaben gemacht.

So sieht eine vorteilhafte Lösung vor, dass das Kollisionserkennungsprogramm mit Daten eines Maschinenmodells arbeitet.

Ferner ist vorzugsweise vorgesehen, dass das Kollisionserkennungsprogramm mit Daten eines Werkzeugmodelliersystems arbeitet.

Ferner ist vorzugsweise vorgesehen, dass das Kollisionserkennungsprogramm mit einem, Aktionen der virtuellen Werkzeugmaschine ermittelnden und ausführenden Aktionsprogramm arbeitet.

Das Aktionsprogramm muss dabei nicht zwingend die Aktionen der virtuellen Bearbeitungseinheit darstellen. Es würde genügen, wenn das Kollisionserkennungsprogramm die Kollisionen rechnerisch ermittelt.

Besonders vorteilhaft ist es jedoch, wenn das Aktionsprogramm einem Visualisierungsprogramm des Simulationssystems entspricht.

Um das erfindungsgemäße Benutzerunterstützungssystem optimal ausnutzen zu können, ist vorgesehen, dass das Kollisionserkennungsprogramm im Hintergrund läuft, so dass im Benutzerunterstützungssystem noch weitere Aktivitäten möglich sind und hierzu die Visualisierungseinheit auch eingesetzt werden kann.

Darüber hinaus wird die eingangs genannte Aufgabe durch ein Verfahren zum Bearbeiten von Werkstücken entsprechend einem CNC-Bearbeitungsprogrammkomplex mittels Aktionen mindestens einer Bearbeitungseinheit, bei welchem von einer Maschinensteuerung, mit einem CNC-Sätze des CNC-Bearbeitungsprogrammkomplexes verarbeitenden Steuerungsprogramm Steuerbefehle für Aktionen der mindestens einen Bearbeitungseinheit ermittelt werden und bei welchen mit diesen Steuerbefehlen über eine Antriebssteuerung ein Antrieb der mindestens eine Bearbeitungseinheit gesteuert wird , gelöst, wobei ein Bedienerunterstützungssystem vorgesehen wird, dass das Bedienerunterstützungssystem unabhängig von der Maschinensteuerung arbeitet, dass das Bedienerunterstützungssystem mit einem Datennetzwerk verbunden wird, über welches Bearbeitungs- und/oder Werkstückinformationen zugänglich sind, und dass mit dem Bedienerunterstützungssystem Bearbeitungs- und/oder Werkstückinformation auf einer Visualisierungseinheit dargestellt werden.

Eine günstige Variante sieht dabei vor, dass über das Netzwerk auf Werkstückinformationen eines CAM-Systems zugegriffen werden kann.

Insbesondere ist es günstig, wenn über das Datennetzwerk auf Konstruktionsinformationen zugegriffen werden kann.

Vorzugsweise sieht eine Lösung vor, dass über das Datennetzwerk auf Konstruktionsinformationen eines CAD-Systems zugegriffen werden kann.

Bei einer zweckmäßigen Lösung ist vorgesehen, dass über das Datennetzwerk auf Produktionsinformationen zugegriffen werden kann.

Besonders günstig ist es dabei, wenn über das Datennetzwerk auf Auftragsinformationen zugegriffen werden kann.

Bei einer Lösung ist vorgesehen, dass das Datennetzwerk ein unternehmensinternes Datennetzwerk ist.

Alternativ oder ergänzend sieht eine weitere vorteilhafte Lösung der Aufgabe vor, dass zwischen dem Bedienerunterstützungssystem und der Maschinensteuerung über eine Schnittstelle Daten ausgetauscht werden können.

Insbesondere ist es dabei günstig, wenn zwischen dem Bedienerunterstützungssystem und der Maschinensteuerung CNC-Bearbeitungsprogrammkomplexe ausgetauscht werden können.

Besonders günstig ist eine Lösung, bei welcher mit den CNC-Bearbeitungsprogrammkomplexen diesen zugeordnete Daten zwischen dem Bedienerunterstützungssystem und der Maschinensteuerung ausgetauscht werden können.

Alternativ oder ergänzend ist bei einer weiteren Lösung der Aufgabe vorgesehen, dass zwischen dem Bedienerunterstützungssystem und der Maschinensteuerung eine Schnittstelle existiert, über welche zumindest teilweise bearbeitete CNC-Sätze ausgetauscht werden können.

Zweckmäßigerweise ist bei einer Ausführungsform vorgesehen, dass über die Schnittstelle zwischen der Maschinensteuerung und dem Bedienerunterstützungssystem Ergebnisse der rechnerischen Bearbeitung von CNC-Sätzen im Kernsteuerungsprogramm ausgetauscht werden können.

Besonders günstig ist es, wenn der Datenaustausch zwischen dem Kernsteuerungsprogramm der Maschinensteuerung und dem Kernsteuerungsprogramm des Bedienerunterstützungssystem durchgeführt wird.

Eine weitere günstige Lösung sieht vor, dass mit von der Maschinensteuerung erhaltenen zumindest teilweise bearbeiteten CNC-Sätzen virtuelle Steuerbefehle ermittelt und die virtuellen Bearbeitungseinheiten gesteuert werden.

Außerdem ist vorteilhafterweise vorgesehen, dass die Schnittstelle zwischen dem Bedienerunterstützungssystem und der Maschinensteuerung eine echtzeitfähige Schnittstelle ist.

Alternativ oder ergänzend sieht eine zweckmäßige Lösung der Aufgabe vor, dass das Bedienerunterstützungssystem als Simulationssystem zur Darstellung von Aktionen von mindestens einer virtuellen Bearbeitungseinheiten einer virtuellen Werkzeugmaschine betrieben wird.

Vorzugsweise ist hierbei vorgesehen, dass von einer Aktionssteuerung mit einem CNC-Sätze des CNC-Bearbeitungsprogrammkomplexes verarbeitenden Steuerungsprogramm die Steuerbefehle für Aktionen mindestens einer virtuellen Bearbeitungseinheit ermittelt werden.

Insbesondere ist eine Lösung so konzipiert, dass von einer Visualisierungssteuerung mit einem Visualisierungsprogramm anhand von Konfigurationsdaten eines gespeicherten Maschinenmodells und den von der Aktionssteuerung ermittelten Steuerbefehlen Aktionen der mindestens einen virtuellen Bearbeitungseinheit ermittelt werden.

Alternativ oder ergänzend sieht eine zweckmäßige Lösung der Aufgabe vor, dass in dem Bedienerunterstützungssystem vorauseilend zur Abarbeitung der CNC-Sätze des CNC-Bearbeitungsprogrammkomplexes eine Simulation der Aktionen der virtuellen Bearbeitungseinheiten zusammen mit einem Kollisionserkennungsprogramm ausgeführt wird und bei Erkennen einer Kollision ein Maschinenstoppsignal ausgelöst wird.

Insbesondere ist es hierbei günstig, wenn die Simulation der Aktionen der mindestens einen virtuellen Bearbeitungseinheit mindestens einen CNC-Satz relativ zur Maschinensteuerung vorauseilend durchgeführt wird.

Weiterhin ist es von Vorteil, wenn die Simulation der Aktionen der mindestens einen virtuellen Bearbeitungseinheit mindestens 5 CNC-Sätze vorauseilend zur Abarbeitung der CNC-Sätze des CNC-Bearbeitungsprogrammkomplexes durch die Maschinensteuerung durchgeführt wird.

Eine weitere zweckmäßige Lösung geht davon aus, dass die Simulation parallel zur Bearbeitung des Werkstücks durchgeführt wird.

Insbesondere ist hierzu vorgesehen, dass die Simulation der Aktionen der mindestens einen virtuellen Bearbeitungseinheit durch Abarbeiten des CNC-Bearbeitungsprogrammkomplexes in der Aktionssteuerung ausgelöst wird.

Ferner ist es bei einer Lösung günstig, wenn die Simulation der Aktionen der mindestens einen virtuellen Bearbeitungseinheit durch das Abarbeiten von CNC-Sätzen in der Aktionssteuerung ausgelöst wird.

Darüber hinaus sieht eine vorteilhafte Variante vor, dass die Abarbeitung eines CNC-Satzes in der Maschinensteuerung eine vorauseilende Abarbeitung dieses CNC-Satzes durch das Simulationssystem ausgelöst wird.

Insbesondere ist es bei einer Variante günstig, wenn die Abarbeitung eines CNC-Satzes durch eine Aktionssteuerung der Maschinensteuerung zu einem teilweise bearbeiteten CNC-Satz führt und dass ein derartiger teilweise bearbeiteter CNC-Satz dem Simulationssystem übergeben wird.

Eine weitere vorteilhafte Lösung sieht vor, dass die Aktionssteuerung die CNC-Sätze des CNC-Bearbeitungsprogrammkomplexes in einem Vorlauf vorausberechnet und die vorausberechneten CNC-Sätze in einem Speicher speichert und dass die vorausberechneten CNC-Sätze spätestens bei ihrer Speicherung dem Simulationssystem übergeben werden.

Bei einer anderen Variante ist es günstig, wenn von dem Simulationssystem virtuelle Aktionen der mindestens einen Bearbeitungseinheit schneller ermittelt werden als von der Aktionssteuerung.

Insbesondere ist es zweckmäßig, wenn das Simulationssystem mit gegenüber der Aktionssteuerung mit verkürztem Zeittakt arbeitet.

Eine weitere Lösung sieht vor, dass das Simulationssystem mit gegenüber der Aktionssteuerung um mindestens einen Faktor 5 schneller ablaufenden Aktionen der Bearbeitungseinheiten arbeitet.

Weiter ist es von Vorteil, wenn das Simulationssystem mit um mindestens einen Faktor 10 schneller ablaufenden Aktionen der Bearbeitungseinheiten arbeitet.

Eine günstige Lösung sieht vor, dass das Kollisionserkennungsprogramm mit Daten eines Maschinenmodells arbeitet.

Eine weitere günstige Lösung sieht vor, dass das Kollisionserkennungsprogramm mit Daten eines Werkzeugmodelliersystems arbeitet.

Ferner ist es bei einer Variante günstig, wenn das Kollisionserkennungsprogramm mit einem Aktionen der virtuellen Werkzeugmaschine ermittelnden und ausführenden Aktionsprogramm arbeitet.

Weiterhin sieht eine zweckmäßige Ausführungsform vor, dass das Aktionsprogramm einem Visualisierungsprogramm des Simulationssystems entspricht.

Weitere Merkmale und Vorteile sind Gegenstand der nachfolgenden Beschreibung sowie der zeichnerischen Darstellung einiger Ausführungsbeispiele.

In der Zeichnung zeigen:
- Fig. 1: eine schematische Darstellung einer Konfiguration eines Ausführungsbeispiels einer erfindungsgemäßen realen Werkzeugmaschine;
- Fig. 2: eine schematische Darstellung einer Programmkonfiguration des Ausführungsbeispiels der erfindungsgemäßen realen Werkzeugmaschine;
- Fig. 3: eine schematische Darstellung einer Zuordnung von Konfigurationsparametern zur Programmkonfiguration des Ausführungsbeispiels der erfindungsgemäßen realen Werkzeugmaschine gemäß Fig. 2;
- Fig. 4: eine Frontansicht der erfindungsgemäßen Werkzeugmaschine im Bereich einer Maschinensteuereinheit;
- Fig. 5: eine schematische Darstellung einer Konfiguration eines Ausführungsbeispiels einer erfindungsgemäßen virtuellen Werkzeugmaschine;
- Fig. 6: eine schematische Darstellung einer Programmkonfiguration des Ausführungsbeispiels der erfindungsgemäßen virtuellen Werkzeugmaschine;
- Fig. 7: eine schematische Darstellung einer Zuordnung von Konfigurationsparametern zur Programmkonfiguration des Ausführungsbeispiels der erfindungsgemäßen virtuellen Werkzeugmaschine gemäß Fig. 2;
- Fig. 8: eine schematische Darstellung eines ersten Ausführungsbeispiels eines erfindungsgemäßen Werkzeugmodelliersystems innerhalb der Programmkonfiguration der erfindungsgemäßen virtuellen Werkzeugmaschine;
- Fig. 9: eine schematische Darstellung eines Aufbaus eines virtuellen Werkzeugs in der erfindungsgemäßen virtuellen Werkzeugmaschine;
- Fig. 10: eine schematische Darstellung einer Erstellung des virtuellen Werkzeugs gemäß Fig. 8;
- Fig. 11: eine schematische Darstellung einer Generierung von Werkzeugdaten beim ersten Ausführungsbeispiel des erfindungsgemäßen Werkzeugmodelliersystems;
- Fig. 12: eine schematische Darstellung ähnlich Fig. 7 eines zweiten Ausführungsbeispiels eines erfindungsgemäßen Werkzeugmodelliersystems innerhalb der Programmkonfiguration der virtuellen Werkzeugmaschine;
- Fig. 13: eine schematische Darstellung ähnlich Fig. 9 einer Generierung eines virtuellen Werkzeugs gemäß dem zweiten Ausführungsbeispiel des erfindungsgemäßen Werkzeugmodelliersystems;
- Fig. 14: eine schematische Darstellung einer Arbeitsweise eines zweiten Ausführungsbeispiels einer erfindungsgemäßen Werkzeugmaschine auf der Basis der Darstellung der Programmkonfiguration gemäß Fig. 2 und Fig. 6;
- Fig. 15: eine detaillierte schematische Darstellung von Abläufen in der Maschinensteuerung und in dem Bedienerunterstützungssystem im Bereich von Kernsteuerungsprogrammen bei einer Simulation zur Kollisionserkennung parallel zu der Bearbeitung eines Werkstücks.

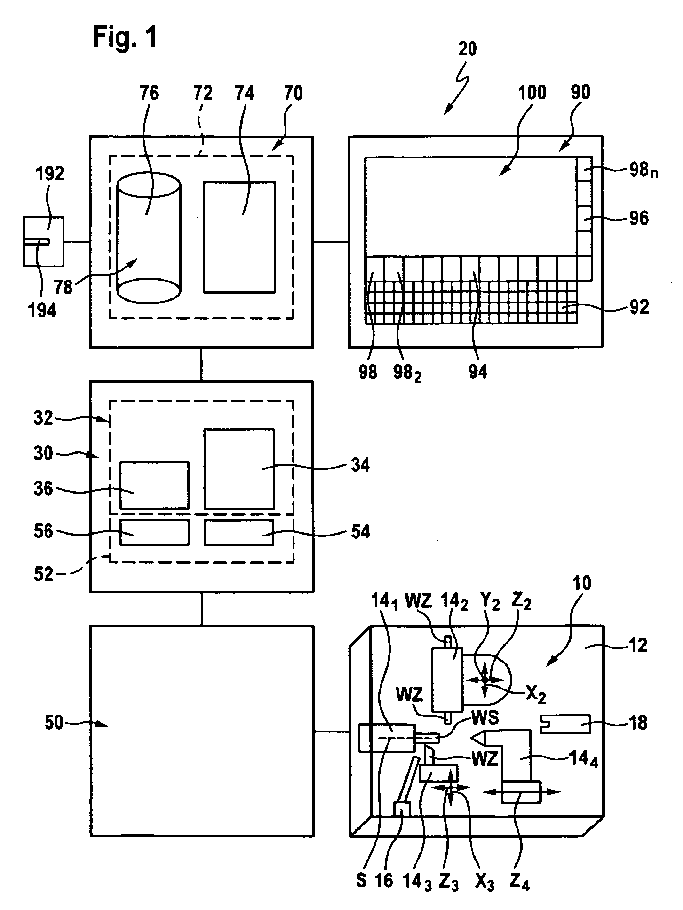

Eine in Fig. 1 bis 3 dargestellte reale Werkzeugmaschine, als Ganzes mit 10 bezeichnet, umfasst ein Maschinenbett 12, auf welchem eine Vielzahl von Bearbeitungseinheiten 14₁, 14₂, 14₃ und 14₄ angeordnet ist, die dazu dienen, ein Werkstück WS zu bearbeiten.

Beispielsweise ist die Bearbeitungseinheit 14₁ eine Werkstückspindel, die Bearbeitungseinheit 14₂ ein Werkzeugträger, die Bearbeitungseinheit 14₃ ein weiterer Werkzeugträger und die Bearbeitungseinheit 14₄ ein Reitstock zur Abstützung des Werkstücks WS.

Die Werkstückspindel 14₁ nimmt dabei das Werkstück WS auf und ist in der Lage, das Werkstück WS um eine Spindelachse S rotierend anzutreiben.

Der Werkzeugträger 14₂ ist beispielsweise als Mehrfachwerkzeugträger ausgebildet und trägt eine Vielzahl von Werkzeugen WZ, von denen jeweils eines an dem Werkstück WS einsetzbar ist.

Der Werkzeugträger 14₂ ist dabei beispielsweise relativ zum Maschinenbett 12 und auch relativ zur Werkstückspindel 14₁ durch drei orthogonal zueinander verlaufende NC-Achsen, beispielsweise eine X-Achse X₂, eine Y-Achse Y₂ und eine Z-Achse Z₂ mit entsprechenden Antrieben, das heißt einem X-Achsenantrieb, einem Y-Achsenantrieb und einem Z-Achsenantrieb bewegbar, um mit dem in Arbeitsstellung befindlichen Werkzeug WZ das Werkstück WS zu bearbeiten.

Auch der Werkzeugträger 14₃ trägt ein Werkzeug WZ und ist beispielsweise entlang einer X-Achse und entlang einer Z-Achse mit entsprechenden Achsantrieben, das heißt einem X-Achsenantrieb und einem Z-Achsenantrieb, relativ zur Werkstückspindel 14₁ bewegbar.

In gleicher Weise ist der Reitstock 14₄ relativ zum Maschinenbett 12 längs einer Z-Achse mit einem Z-Achsantrieb bewegbar, um den Reitstock 14₄ zur Abstützung des Werkstücks WS in Richtung desselben zu verfahren.

Ferner ist die Werkzeugmaschine 10 beispielsweise mit einer Kühlmittelzufuhr 16 und einer Werkstückhandhabung 18 versehen.

Zur Bearbeitung des Werkstücks durch Bewegen der NC-Achsen X₂, Y₂, Z₂, X₃, Z₃, Z₄ ist die Werkzeugmaschine 10 mit einer als Ganzes mit 20 bezeichneten Maschinensteuerung vorgesehen, welche eine Aktionssteuerung 30 mit einer ersten Datenverarbeitungseinheit 32 aufweist, die ihrerseits durch einen Prozessor 34 und einen Speicher 36 gebildet ist, wobei der Speicher 36 als Speicher mit schnellem Zugriff ausgebildet ist, das heißt beispielsweise als RAM-Speicher.

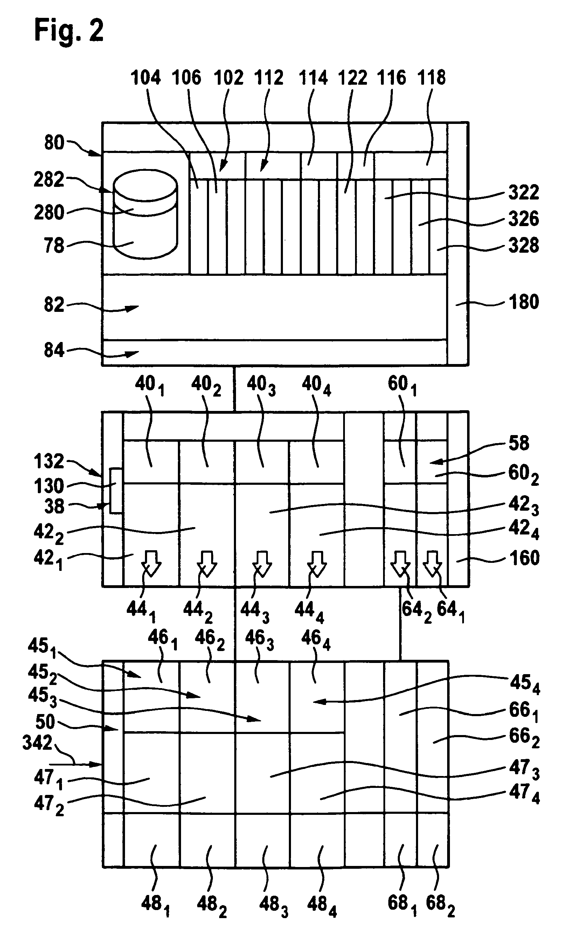

Auf der Datenverarbeitungseinheit 32 läuft, wie in Fig. 2 dargestellt, ein als Ganzes mit 38 bezeichnetes Kernsteuerungsprogramm, welches in der Lage ist, CNC-Sätze von einem oder mehreren Teileprogrammen 40, beispielsweise von den Teileprogrammen 40₁ bis 40₄, abzuarbeiten, wobei die Teileprogramme 40₁ bis 40₄ einzelnen Kanälen 42₁ bis 42₄ des Kernsteuerungsprogramms 38 zugeordnet sind, welche die parallele Abarbeitung der einzelnen Teileprogramme 40₁ bis 40₄ erlauben, die entweder unabhängig voneinander erfolgt oder durch Synchronisierbefehle synchronisiert werden kann.

In jedem der Kanäle 42₁ bis 42₄ werden Steuerbefehle 44₁ bis 44₄ ermittelt, die dazu dienen, Aktionen der Bearbeitungseinheiten 14 zu veranlassen und zu steuern.

Beispielsweise ist jeweils einer der Kanäle 42 einer Funktionsweise einer oder mehrerer Bearbeitungseinheiten 14, beispielsweise den Bewegungsachsen X₂, Y₂, Z₂ der Bearbeitungseinheit 14₂, und einer Drehzahl oder einer Drehposition der Bearbeitungseinheit 14₁, um die Spindelachse S, zugeordnet.

Zur Steuerung von Achsantrieben 48 ist für jeden der Kanäle 42 eine Antriebssteuerung 45 mit Antriebsverstärker 46₁ bis 46₄ und Regelkreise 47₁, 47₂, 47₃ und 47₄ vorgesehen, die die jeweiligen Achsantriebe 48, beispielsweise die Achsantriebe 48₁, 48₂, 48₃ und 48₄, geregelt betreiben, wobei die Antriebsverstärker 46, die Regelkreise 47 und die Achsantriebe 48 ein Antriebssystem 50 der Werkzeugmaschine 10 bilden.

Dabei können die Regelkreise 47 beispielsweise Lageregelkreise und/oder Geschwindigkeitsregelkreise sein.

Um Zusatzfunktionen der Werkzeugmaschine 10 steuern zu können, ist in der Aktionssteuerung 30 noch eine speicherprogrammierbare Steuerung 52 zusätzlich zur ersten Datenverarbeitungseinheit 32 vorgesehen, die ihrerseits einen Prozessor 54 sowie ein Speicher 56, als Speicher mit schnellem Zugriff, aufweist.

Mit der speicherprogrammierbaren Steuerung 52 sind dabei Zusatzfunktionen, wie beispielsweise die Kühlmittelzufuhr 16 oder die Werkstückhandhabung 18 steuerbar.

Hierzu ist, wie in Fig. 2 dargestellt, ein Zusatzfunktionssteuerprogramm 58 vorgesehen, welches einzelne Teilfunktionen 60₁ und 60₂ aufweist, die ebenfalls dazu dienen, Zusatzfunktionssteuerbefehle 64₁ und 64₂ zu erzeugen, die entsprechenden Aktorversorgungen 66₁ und 66₂ übermittelt werden, um entsprechende Aktoren 68₁ und 68₂ anzusteuern.

Die Aktionssteuerung 30 ist durch eine als Ganzes mit 70 bezeichnete Bediensteuerung steuerbar, welche eine Datenverarbeitungseinheit 72 aufweist, die ihrerseits beispielsweise einen Prozessor 74 und einen Speicher 76 für einen oder mehrere CNC-Bearbeitungsprogrammkomplexe 78 umfasst.

In dem Speicher 76 ist daher der gesamte für die Bearbeitung des Werkstücks WS vorgesehene CNC-Bearbeitungsprogrammkomplex 78 gespeichert.

Ferner läuft auf der Datenverarbeitungseinheit 72 ein als Ganzes mit 80 bezeichnetes und in Fig. 2 schematisch dargestelltes Bedienprogramm, welches eine Bedienoberfläche 82 aufweist, die mit einer als Ganzes mit 90 bezeichneten Maschinensteuereinheit, auch als Maschinensteuertafel bezeichnet, zusammenwirkt, die beispielsweise ein übliches Tastenfeld 92 sowie Reihen 94 und 96 von Funktionstasten 98₁ bis 98ₙ umfasst.

Sowohl über das Tastenfeld 92 als auch über die Funktionstasten 98 besteht die Möglichkeit, über die Bedienoberfläche 82 einzelne Funktionsabläufe oder Modi des Bedienprogramms 80 aufzurufen und/oder zu aktivieren.

Ferner ist der Maschinensteuertafel 90 vorzugsweise noch ein Anzeigefeld 100 zugeordnet, welches die Anzeige von von dem Bedienprogramm 80 ermittelten Informationen ermöglicht. Beispielsweise ist dabei das Anzeigefeld 100 von der Bedienoberfläche 82 ansteuerbar.

Das Bedienprogramm 80 kommuniziert mit dem Kernsteuerungsprogramm 38 über ein Anpassprogramm 84.

Das Bedienprogramm 80 umfasst ferner beispielsweise eine in Fig. 2 als Ganzes mit 102 bezeichnete Programmverwaltungsfunktion, welche in der Lage ist, den im Speicher 76 gespeicherten CNC-Bearbeitungsprogrammkomplex 78 werkstückbezogen zu verwalten, das heißt, dass die Programmverwaltungsfunktion 102 die einzelnen Teileprogramme 40 des CNC-Bearbeitungsprogrammkomplexes 78 derart verwaltet, dass sie zu dem jeweiligen Werkstück WS gehörende Teileprogramme 40 entsprechend ihrer funktionalen Zusammengehörigkeit verarbeitet.

So sieht beispielsweise ein Transfermodus 104 der Programmverwaltungsfunktion 102 vor, dass die zu demselben Werkstück WS gehörenden Teileprogramme 40 zur Bearbeitung dieses Werkstücks WS in ihrem funktionalen Zusammenhang von der Bediensteuerung 70 zur Aktionssteuerung 30 transferiert werden und dabei werkstückbezogen dem Kernsteuerungsprogramm 38 übergeben werden, also beispielsweise den einzelnen Kanälen 42 des Kernsteuerungsprogramms 38 funktionsrichtig zugeordnet und entsprechend aktiviert werden.

In der Programmverwaltungsfunktion 102 gibt es noch weitere Modi, wie beispielsweise einen Start-Stoppmodus 106.

Weitere Funktionen des Bedienprogramms 80 sind eine Programmbearbeitungsfunktion 112 und/oder eine Analysefunktion 114 sowie eine Konfigurationsfunktion 116 und eine Werkzeugfunktion 118.

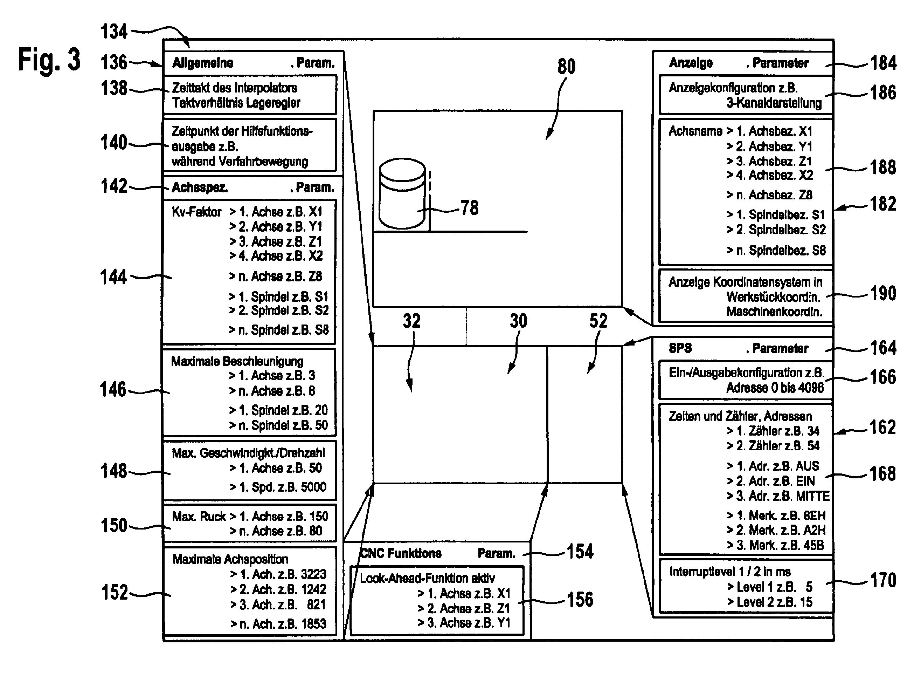

Um die Werkzeugmaschine 10 steuern zu können, ist ein Parameterfeld 130 in einer Programmumgebung 132 des Kernsteuerungsprogramms 38 vorgesehen, welches, wie in Fig. 3 dargestellt, Kernsteuerungsparameter 134 umfasst, die in Fig. 3 beispielhaft dargestellt sind.

Derartige Kernsteuerungsparameter 134 lassen sich unterteilen in allgemeine Parameter 136, wie beispielsweise Zeittaktparameter, welche beispielsweise der Zeittakt des Interpolators und/oder das Taktverhältnis des Lagereglers sind. Zu den allgemeinen Parametern 136 können aber auch Zeitpunktparameter 140 gehören, welche beispielsweise einen Zeitpunkt der Hilfsfunktionsausgabe definieren.

Neben den allgemeinen Parametern 136 gehören zu den Kernsteuerungsparametern 134 auch achsspezifische Parameter 142, die beispielsweise Verstärkungsparameter 144 umfassen, dies sind Parameter, die die Kreisverstärkung der einzelnen Regelkreise 47 festlegen.

Ferner gehören zu den achsspezifischen Parametern 142 Beschleunigungsparameter 146, welche beispielsweise die maximale Beschleunigung der NC-Achsen durch die Antriebsverstärker 46 festlegen.

Ferner umfassen die achsspezifischen Parameter 142 Geschwindigkeitsparameter 148, welche beispielsweise maximale Verfahrgeschwindigkeiten oder maximale Drehzahlen der jeweiligen Achse festlegen.

Beispielsweise umfassen die achsspezifischen Parameter 142 noch Ruckparameter 150, welche beispielsweise den maximalen Ruck einer jeweiligen NC-Achse festlegen.

Außerdem umfassen die achsspezifischen Parameter 142 auch noch Achspositionsparameter 152, welche die jeweiligen maximalen Achspositionen festlegen.

Das Parameterfeld 130 umfasst außerdem noch zusätzlich zu den Kernsteuerungsparametern 134 CNC-Funktionsparameter 154, welche beispielsweise Look-Ahead-Parameter 156 für die einzelnen NC-Achsen aufweisen. Als Look-Ahead-Funktion wird eine vorausschauende Betrachtung der Werkzeugbahn bezeichnet, die an Ecken und Kanten rechtzeitig und automatisch den Vorschub auf ein für die maximal zulässige Bahnabweichung zulässiges Maß reduziert, wobei diese Funktion durch mindestens einen vorzugsweise mehrere Look-Ahead-Parameter 156, wie beispielsweise die Vorschubgeschwindigkeit und/oder maximale Bahnabweichung, festlegbar ist.

Darüber hinaus ist dem Zusatzfunktionssteuerprogramm 58 ebenfalls ein Parameterfeld 160 zugeordnet, in welchem als Ganzes mit 162 bezeichnete Zusatzfunktionsparameter vorhanden sind, mit welchen das Zusatzfunktionssteuerprogramm 58 arbeitet.

Die Zusatzfunktionsparameter 162 umfassen beispielsweise SPS-Parameter 164, welche ihrerseits zum Beispiel Adressparameter 166 für eine Ein-/Ausgabe von Informationen aufweisen und/oder numerische Funktionsparameter 168 oder Interruptparameter 170.

Mit diesen Zusatzfunktionsparametern 162 lässt sich somit das Zusatzfunktionssteuerprogramm 58 an die jeweilige Werkzeugmaschine anpassen.

Schließlich umfasst das Bedienprogramm 80 noch ein Parameterfeld 180, welches Bedienparameter 182 aufweist, die zur Anpassung des Bedienprogramms 80 an die jeweilige spezifische Werkzeugmaschine dienen.

Derartige Bedienparameter 182 umfassen beispielsweise Anzeigeparameter 184, die ihrerseits beispielsweise Kanaldarstellungsparameter 186, Achsnamenparameter 188 und Koordinatensystemparameter 190 aufweisen.

Sowohl die Kernsteuerungsparameter 134 als auch die Zusatzfunktionsparameter 162 und die Bedienparameter 182 umfassen typspezifische, das heißt für den jeweiligen Maschinentyp vorgesehene Parameter, als auch individuelle Parameter, das heißt auf die einzelne individuelle Werkzeugmaschine, beispielsweise identifiziert durch ihre Seriennummer, bezogene individuelle Parameter, die die Steuerungsfunktionen an die einzelne spezifisch ausgestattete Werkzeugmaschine 10 anpassen.

Beispielsweise sind die allgemeinen Parameter 136 in der Regel typspezifische Konfigurationsparameter, während die achsspezifischen Parameter 142 als auch die CNC-Funktionsparameter 154 individuelle Konfigurationsparameter sind.

Die Individualität bei den achsspezifischen Parametern 142 kommt daher, dass bei einer bestimmten Maschinentype für einen anwenderspezifischen Einsatzzweck zum Beispiel eine von der Standardausrüstung der Maschinentype abweichende Kugelrollspindel eingebaut wurde, um höhere Vorschubkräfte zu erreichen, wobei in diesem Fall dann die Beschleunigungsparameter 146 zumindest für diese NC-Achse angepasst, z.B. niedriger gewählt, werden.

Die Individualität bei den achsspezifischen Parametern 142 kann aber auch durch von der Standardausrüstung eines Maschinentyps abweichende Bearbeitungseinheiten 14 bedingt sein, die eine Anpassung der Verstärkungsparameter 144 und/oder der Geschwindigkeitsparameter 148 erfordern.

Auch die CNC Funktionsparameter 154 können von Standardwerten eines Maschinentyps abweichend gewählt sein, je nach dem wie genau ein anwenderspezifischer Fertigungsprozess ist, so dass entsprechend der durchzuführenden Rechenoperationen die Look-Ahead-Parameter 156 angepasst sind.

Ferner umfassen auch die Zusatzfunktionsparameter 162 beispielsweise in Form der Adressparameter 166 und der Interruptparameter 170 typspezifische Konfigurationsparameter, während beispielsweise die numerischen Funktionsparameter 168 individuelle Konfigurationsparameter darstellen.

Auch Zusatzfunktionen sind oft abweichend von einer Standardausstattung eines Maschinentyps ausgebildet. Beispielsweise ist die Werkstückhandhabung vielfach individuell auf das zu bearbeitende Werkstück WS abgestimmt, wodurch individuelle zum Beispiel abgestimmte Funktionsparameter 168 notwendig sind.

Schließlich umfassen auch die Bedienparameter 182 einerseits typspezifische Konfigurationsparameter, nämlich beispielsweise die Kanaldarstellungsparameter 186 und die Koordinatensystemparameter 190, während die Achsbenennungsparameter 188 individuelle Konfigurationsparameter darstellen.

Um auch bei der Bedienung einem individuellen Aufbau der Werkzeugmaschine 10 Rechnung tragen zu können, sind auch beispielsweise die Achsenbenennungen individuell angepasst, so dass in diesen Fällen auch die Achsbenennungsparameter 188 von einer Standardbenennung eines Maschinentyps abweichen.

Um bei der erfindungsgemäßen Lösung die Konfigurationsparameter einer spezifischen individuellen Werkzeugmaschine 10 archivieren und gegebenenfalls weiterverwenden zu können, ist der Bediensteuerung 70, wie in Fig. 1 dargestellt, eine externe Datenspeichereinrichtung 192 mit einem Datenträger 198 zugeordnet, in welcher durch einen Konfigurationsparameterübergabemodus 122 der Konfigurationsfunktion 116 des Bedienprogramms 80 ein Abspeichern sämtlicher Konfigurationsparameter 134, 154, 162 und 182 möglich ist.

Damit besteht die Möglichkeit, die Konfigurationsparameter jeder einzelnen spezifischen Werkzeugmaschine 10 individuell, beispielsweise auf der Basis der Maschinennummer, und beispielsweise auf einem transportablen Datenträger 194 gespeichert zu halten oder per Datentransfer einem Rechner zu übergeben.

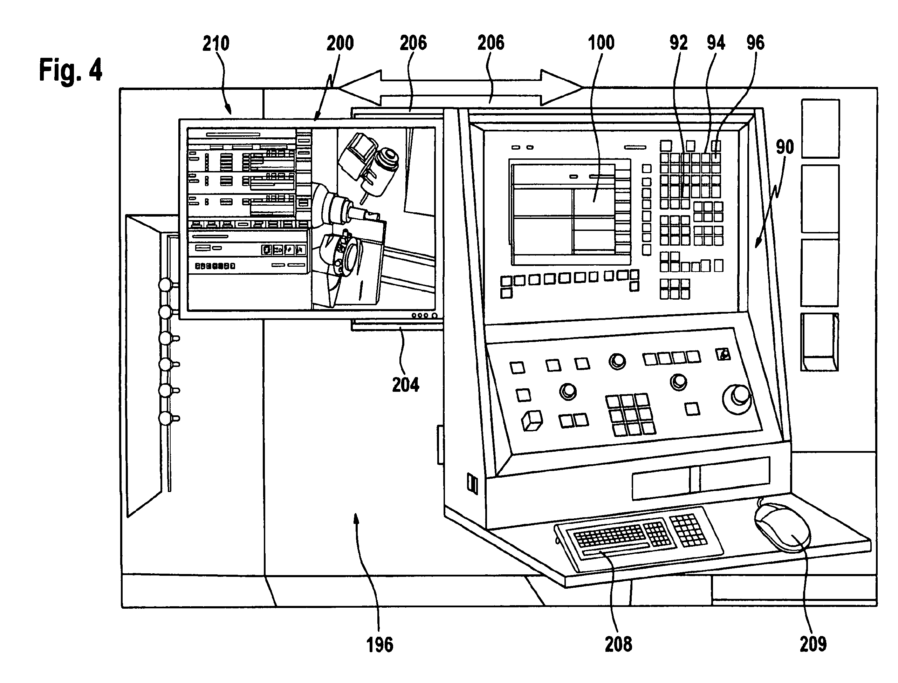

Eine Ansicht einer realen Maschinensteuereinheit 90 ist in Fig. 4 dargestellt. Diese ist beispielsweise an einer Maschinenverhaubung 196 der Werkzeugmaschine angeordnet.

Der Maschinensteuereinheit 90 ist ein Bedienerunterstützungssystem 200 zugeordnet, welches eine an einem Gehäuse 202 der Maschinensteuereinheit 90 angeordnete Visualisierungseinheit 210 mit einem Bildschirm 212 umfasst, die an Führungen 204 in einer Richtung 206 verschiebbar gelagert ist und mittels Bedienelementen 208, 209 bedienbar ist, wobei beispielsweise das Bedienelement 208 ein Tastenfeld ist und das Bedienelement 209 eine Maus.

Mit der erfindungsgemäßen Lösung der Visualisierungseinheit 210 an dem Gehäuse 202 der Maschinensteuereinheit 90 besteht die Möglichkeit, diese in einer aktiven Stellung, die in Fig. 4 dargestellt ist, seitlich neben dem Gehäuse 202 der Maschinensteuereinheit 90 zu positionieren, oder der Verschieben in Richtung 206 in einer inaktiven Stellung nicht von vorn erkennbar und geschützt hinter dem Gehäuse 202, d.h. zwischen diesem und der Maschinenverhaubung 196, zu positionieren.

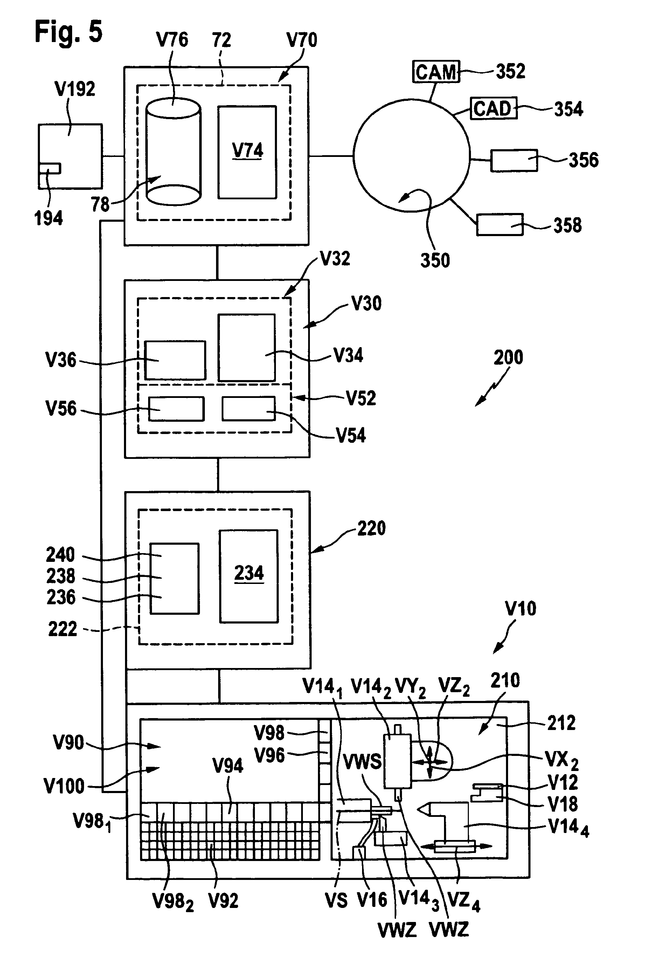

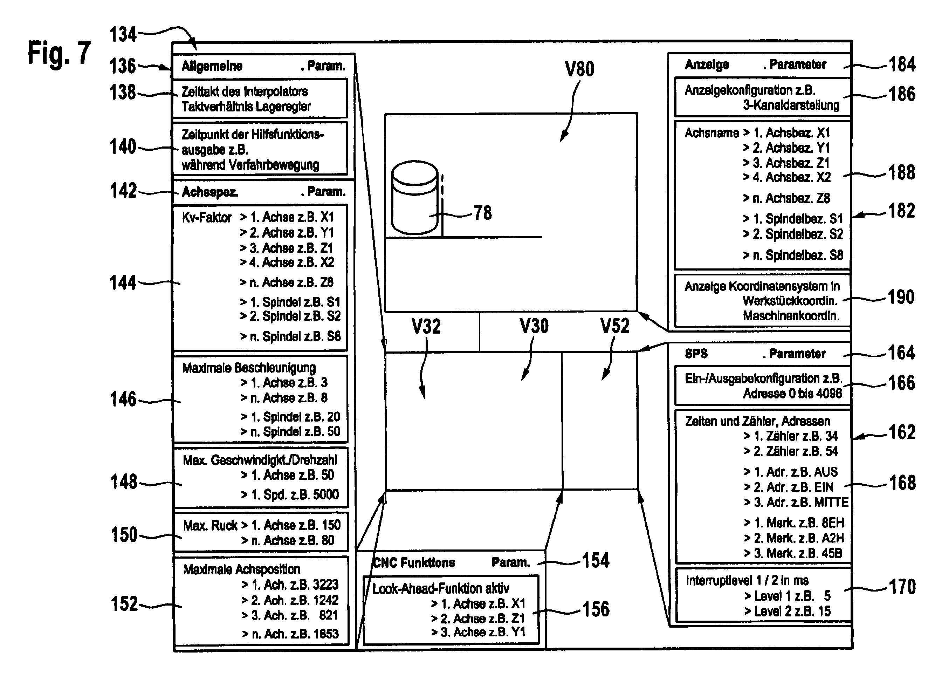

Das in Fig. 5 und 7 schematisch dargestellte Bedienerunterstützungssystem 200 kann als virtuelle Werkzeugmaschine, als Ganzes mit V10 bezeichnet, unabhängig von der Maschinensteuerung 20 betrieben werden und bildet, umfasst eine als Ganzes mit V20 bezeichnete eigene Maschinensteuerung, welche eine Aktionssteuerung V30 aufweist, die eine erste Datenverarbeitungseinheit V32 mit einem Prozessor V34 und einem Speicher V36 umfasst, wobei der Speicher V36 als Speicher mit schnellem Zugriff ausgebildet ist.

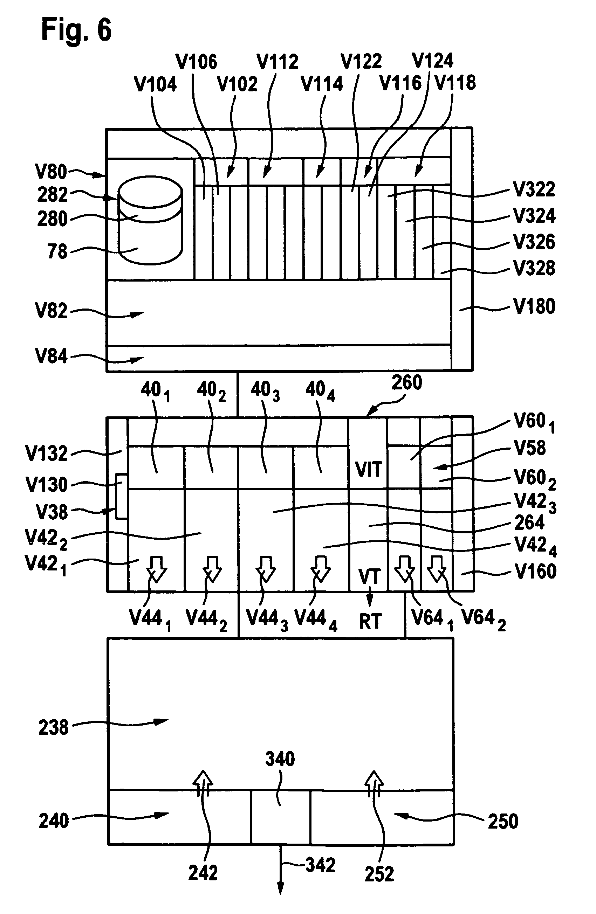

Auf der Datenverarbeitungseinheit V32 läuft, wie in Fig. 6 dargestellt, ein als Ganzes mit V38 bezeichnetes Kernsteuerungsprogramm, welches im einfachsten Fall identisch ausgebildet ist, wie das Kernsteuerungsprogramm 38 der realen Werkzeugmaschine 10, auf jeden Fall jedoch in der Lage ist, die CNC-Sätze von einem oder mehreren Teileprogrammen 40, beispielsweise ebenfalls von den Teileprogrammen 40₁ bis 40₄, in derselben Art und Weise wie das Kernsteuerungsprogramm 38 abzuarbeiten, wobei das Abarbeiten der Teileprogramme 40₁ bis 40₄ in gleicher Weise wie beim Kernsteuerungsprogramm 38 in einzelnen Kanälen V42₁ bis V42₄ des Kernsteuerungsprogramms V38 erfolgt, so dass eine parallele Abarbeitung der einzelnen Teileprogramme 40₁ bis 40₄ möglich ist, die entweder unabhängig voneinander oder synchronisiert durch Synchronisierbefehle erfolgt.

In jedem der Kanäle V42₁ bis V42₄ werden Steuerbefehle V44₁ bis V44₄ ermittelt, die vom Grundsatz her den Steuerbefehlen der realen Werkzeugmaschine 10 entsprechen, jedoch gegebenenfalls auf einer anderen Zeitskala ablaufen.

Die Steuerbefehle V44₁ bis V44₄ dienen dazu, virtuelle Bearbeitungseinheiten V14₁ bis V14₄ zu Aktionen zu veranlassen, wobei die virtuellen Bearbeitungseinheiten V14₁ bis V14₄ von einer Visualisierungseinheit 210, beispielsweise auf einem Bildschirm 212 der Visualisierungseinheit 210, dargestellt werden.

Die Darstellung der virtuellen Bearbeitungseinheiten V14 relativ zu einem virtuellen Maschinenbett V12 durch die Visualisierungseinheit 210 erfolgt mittels einer Visualisierungssteuerung 220, welche eine weitere Datenverarbeitungseinheit 222 aufweist, die beispielsweise ihrerseits einen Prozessor 234 und einen Speicher 236 aufweist, in welchem ein Visualisierungsprogramm 238 sowie ein Maschinenmodell 240 und ein Werkzeugmodelliersystem 250 vorhanden sind.

Wie in Fig. 6 dargestellt, ist das Visualisierungsprogramm 238 so ausgebildet, dass mittels entsprechend den Geometriedaten des Maschinenmodells 240, vorzugsweise den dreidimensionalen Geometriedaten des

Maschinenmodells 240, generierter Maschinenkonfigurationsdaten 242 auf der Visualisierungseinheit 210 die einzelnen Bearbeitungseinheiten V14 der realen Werkzeugmaschine dargestellt werden, und zwar möglichst identisch mit den realen Bearbeitungseinheiten 14 der realen Werkzeugmaschine 10.

Besonders vorteilhaft ist es, wenn das Maschinenmodell 240 die dreidimensionalen Geometriedaten aller bei der realen Werkzeugmaschine 10 vorhandenen Bearbeitungseinheiten 14 sowie des Maschinenbetts 12 gespeichert hat und daraus Maschinenkonfigurationsdaten 242 generiert und dem Visualisierungsprogramm 238 übermittelt werden.

Die Geometriedaten werden vorzugsweise beim Einrichten der virtuellen Werkzeugmaschine V10 einmalig von der Maschinensteuerung 20 oder einer Speichereinrichtung eingelesen.

Ferner ist vorzugsweise das Werkzeugmodelliersystem 250 so ausgebildet, dass es in der Lage ist, dem Visualisierungsprogramm 238 Werkzeugkonfigurationsdaten 252 zur Verfügung zu stellen, mit welchem das Visualisierungsprogramm 238 einzelnen Werkzeugplätzen der Bearbeitungseinheiten V14 die virtuellen Werkzeuge VWZ zuordnet.

Darüber hinaus ist das Visualisierungsprogramm 238 in der Lage, entsprechend den Steuerbefehlen V44 Aktionen der virtuellen Bearbeitungseinheiten V14 auf der Visualisierungseinheit 210, insbesondere dem Bildschirm 212 derselben darzustellen, und zwar durch den realen NC-Achsen X, Y, Z entsprechende Bewegungen längs virtueller NC-Achsen VX, VY, VZ.

Das Visualisierungsprogramm 238 arbeitet vorzugsweise so, dass virtuelle Steuerbefehle V44, die mit realen Steuerbefehlen 44 identisch sind, Bewegungen der virtuellen Bearbeitungseinheiten V14 entsprechend den virtuellen NC-Achsen VX, VY, VZ erzeugen, die unter Berücksichtigung eines Darstellungsmaßstabs den Bewegungen der realen Bearbeitungseinheiten 14 entsprechen.

Wahlweise, je nach dem, ob Zusatzfunktionen für eine Simulation des Bearbeitungsprogrammkomplexes 78 auf der virtuellen Maschinensteuerung V20 maßgebend sind oder nicht, ist der Aktionssteuerung V30 noch eine speicherprogrammierbare Steuerung V52 zugeordnet, welche ihrerseits einen Prozessor V54 sowie einen Speicher V56, insbesondere ausgebildet als Speicher mit schnellem Zugriff, aufweist.

Mit der speicherprogrammierenden Steuerung V52 lassen sich dabei ebenfalls in gleicher Weise wie bei der realen Werkzeugmaschine 10 Zusatzfunktionen simulieren, wie beispielsweise das Arbeiten einer virtuellen Kühlmittelzufuhr V16 oder einer virtuellen Werkstückhandhabung V18, die beide auf dem Bildschirm 212 der Visualisierungseinheit 210 ebenfalls darstellbar sind, und zwar in gleicher Weise wie die Bearbeitungseinheiten V14, nämlich durch im Maschinenmodell 240 gespeicherte Geometriedaten.

Für das Steuern der Zusatzfunktionen ist, wie in Fig. 6 dargestellt, ein Zusatzfunktionssteuerprogramm V58 vorgesehen, welches einzelne Teilfunktionsprogramme V60, beispielsweise die Teilfunktionsprogramme V60₁ und V60₂, aufweist, die ebenfalls dazu dienen, Zusatzfunktionssteuerbefehle V64₁ und V64₂ zu erzeugen, die dann dem Visualisierungsprogramm 238 übermittelt werden.

Die Aktionssteuerung V30 ist ferner durch eine als Ganzes mit V70 bezeichnete Bediensteuerung steuerbar, welche eine Datenverarbeitungseinheit V72 aufweist, die ihrerseits beispielsweise einen Prozessor V74 und einen Speicher V76 für einen oder mehrere CNC-Bearbeitungsprogrammkomplexe 78 umfasst.

Die Bearbeitungsprogrammkomplexe 78 für die virtuelle Werkzeugmaschine V10 sind dabei in identischer Weise aufgebaut und ausgebildet, wie die realen CNC-Bearbeitungsprogrammkomplexe 78 der realen Werkzeugmaschine 10, um die Möglichkeit zu haben, ein und denselben CNC-Bearbeitungsprogrammkomplex 78 einerseits auf der virtuellen Werkzeugmaschine V10 testen zu können, andererseits diesen dann unverändert auf der realen Werkzeugmaschine 10 zum Bearbeiten eines realen Werkstücks WS einsetzen zu können.

Außerdem läuft auf der Datenverarbeitungseinheit V72 ein als Ganzes mit V80 bezeichnetes und in Fig. 6 dargestelltes Bedienprogramm, welches eine Bedienoberfläche V82 aufweist, die mit einer als Ganzes mit V90 bezeichneten Bediensteuereinheit zusammenwirkt, die beispielsweise ein virtuelles, auf der Visualisierungseinheit 210 dargestelltes üblich konzipiertes Tastenfeld V92 sowie Reihen V94 und V96 von Funktionstasten V98₁ bis V98ₙ umfasst, so dass die Bediensteuereinheit V90 eine virtuelle Maschinensteuertafel ist bei der die, gesteuert durch die Bedienoberfläche V82, Tastenfelder V92 sowie die Reihen V94 und V96 von Funktionstasten V98₁ bis V98₄ auf einem Bildschirm V99 dargestellt sind und über die Bedienelemente 208, 209 mittels eines Cursors betätigbar sind, wobei die virtuelle Maschinensteuertafel in einem Teilbereich des Bildschirms 212 erscheint, während der andere Teilbereich zur Darstellung der virtuellen Bearbeitung des virtuellen Werkstücks VWS einsetzbar ist.

Sowohl über das Tastenfeld V92 als auch über die Funktionstasten V98 besteht die Möglichkeit, über die Bedienoberfläche V82 einzelne Funktionsabläufe oder Modi des Bedienprogramms V80 aufzurufen und/oder zu aktivieren.

Ferner ist der Maschinensteuertafel V90 vorzugsweise noch ein auf dem Bildschirm V99 dargestelltes Anzeigefeld V100 zugeordnet, welches die Anzeige von von dem Bedienprogramm V80 übermittelten Informationen ermöglicht. Beispielsweise ist dabei das Anzeigefeld V100 von der Bedienoberfläche V82 ansteuerbar.

Das Bedienprogramm V80 umfasst beispielsweise zumindest die auch bei der realen Werkzeugmaschine 10 vorhandene und in Fig. 6 als Ganzes mit V102 bezeichnete Programmverwaltungsfunktion mit einem Transfermodus V104, der identisch arbeitet wie bei der realen Werkzeugmaschine 10.

Ferner besteht auch die Möglichkeit, einen Start-/Stoppmodus V106 und/oder eine Programmbearbeitungsfunktion V112 und/oder eine Analysefunktion V114, eine Konfigurationsfunktion V116 und eine Werkzeugfunktion V118 vorzusehen.

Außerdem kommuniziert das Bedienprogramm V80 mit dem Kernsteuerungsprogramm V38 über ein Anpassprogramm V84.

Grundsätzlich kann das Bedienprogramm V80 sämtliche Funktionalitäten aufweisen, wie sie beispielsweise in der deutschen Patentanmeldung DE 10 2005 045 028 A1 beschrieben sind.

Auf diese deutsche Patentanmeldung wird daher vollinhaltlich Bezug genommen.

Um die Simulation der Bearbeitung eines Werkstücks WS mittels des hierzu erstellten Bearbeitungsprogrammkomplexes 78 durch virtuelle Bearbeitung eines virtuellen Werkstücks VWS auf der virtuellen Werkzeugmaschine V10 in gleicher Weise unter möglichst identischen Bedingungen wie auf der realen Werkzeugmaschine 10 durchführen zu können, ist in einer Programmumgebung V132 des Kernsteuerungsprogramms V38 das Parameterfeld V130 vorgesehen, welches zur Aufnahme der Kernsteuerungsparameter 134 geeignet ist.

Die Kernsteuerungsparameter 134 können dabei dieselben sein, wie die Kernsteuerungsparameter, die in der realen Werkzeugmaschine 10 eingesetzt werden.

Auf jeden Fall umfassen die Kernsteuerungsparameter 134 die typspezifischen Konfigurationsparameter, wie beispielsweise die allgemeinen Parameter 136, da diese für den jeweiligen Typ der Werkzeugmaschine 10 spezifisch sind.

Von den individuellen Konfigurationsparametern sind vorzugsweise alle dynamikrelevanten Konfigurationsparameter ebenfalls in dem Parameterfeld V130 vorhanden, insbesondere die achsspezifischen Parameter 142 und die CNC-Funktionsparameter 154, da diese für die Geschwindigkeit der Abarbeitung der NC-Sätze bei der Simulation einer Bearbeitung eines Werkstücks WS durch Bearbeitung eines virtuellen Werkstücks VWS mittels des Bearbeitungsprogrammkomplexes 78 wesentlich sind.

Vorzugsweise sind in dem Parameterfeld V130 der virtuellen Werkzeugmaschine V10 sämtliche Konfigurationsparameter enthalten, die auch in dem Parameterfeld 130 der realen Werkzeugmaschine 10 vorliegen.

Darüber hinaus ist dem Zusatzfunktionssteuerprogramm V58 ebenfalls ein Parameterfeld V160 zugeordnet, welches dazu geeignet ist, die mit 162 bezeichneten Zusatzfunktionsparameter aufzunehmen.

Vorzugsweise sind alle typspezifischen Zusatzfunktionsparameter 162 wie zum Beispiel Achsparameter 166 oder Interruptparameter 170 in dem Parameterfeld V160 vorhanden.

Sollen bei der Simulation des Bearbeitungsprogrammkomplexes 78 auch die Zusatzfunktionen mitberücksichtigt und somit mitsimuliert werden, ist es ebenfalls erforderlich, dass auch die individuellen Konfigurationsparameter, wie zum Beispiel Achsbenennungsparameter, im Parameterfeld V160 vorhanden sind, um bei der virtuellen Werkzeugmaschine V10 die Zusatzfunktionen in gleicher Weise abarbeiten zu können, wie bei der realen Werkzeugmaschine 10.

Schließlich ist auch das Bedienprogramm V80 noch mit einem Parameterfeld V180 versehen, in welchem die Bedienparameter 182 speicherbar sind, die zur Anpassung des Bedienprogramms V80 an die jeweilige virtuelle Werkzeugmaschine V10 dienen.

Um für die den Bearbeitungsprogrammkomplex 78 simulierende Bedienungsperson dieselben Bedienverhältnisse zu schaffen, ist daher vorzugsweise vorgesehen, dass von den Bedienparametern 182 zumindest die typspezifischen Konfigurationsparameter von der realen Werkzeugmaschine 10 in das Parameterfeld V180 der virtuellen Werkzeugmaschine V10 übernommen sind.

Noch besser ist es, wenn auch die individuellen Konfigurationsparameter übernommen werden.

Hierzu ist eine Konfigurationsfunktion V116 des Bedienprogramms V80 mit einem Konfigurationsparameterübernahmemodus V124 ausgestattet, welcher in der Lage ist, von einer externen Datenspeichereinrichtung V192 beispielsweise vor einem erstmaligen Beginn der Simulation die der ganz speziellen realen Werkzeugmaschine 10 zugeordneten individuellen Konfigurationsparameter 142, 154, 168, 188 aus dem Datenträger 194 der Datenspeichereinrichtung 192 auszulesen und in die Parameterfelder 130, 160, 180 der virtuellen Werkzeugmaschine V10 einzuschreiben. Somit wird aus einer beispielsweise typspezifisch konfigurierten virtuellen Werkzeugmaschine V10 eine einer zumindest in wesentlichen Konfigurationsparametern einer einzelnen individuellen realen Werkzeugmaschine 10 angepasste virtuelle Werkzeugmaschine V10.

Wird der Datenträger 194 der der realen Werkzeugmaschine 10 zugeordneten Datenspeichereinrichtung 192 auch mit der Bediensteuerung V70 verbunden, so lassen sich die bei der realen Werkzeugmaschine 10 vorliegenden Konfigurationsparameter einfach auf die virtuelle Werkzeugmaschine V10 übernehmen.

Eine andere Möglichkeit ist die, dass anstelle der Datenspeichereinrichtung 192 mit dem Datenträger 194 eine Datenübertragungsverbindung, beispielsweise eine Datenleitung, zwischen der Bediensteuerung 70 und der Bediensteuerung V70 eingesetzt wird.

Soll eine absolute Identität der Konfigurationsparameter sichergestellt werden, so schreibt der Konfigurationsparameterübernahmemodus V124 alle in der Speichereinrichtung V192 vorhandenen Konfigurationsparameter in die Parameterfelder 130, 160, 180.

Um bei der Simulation der Bearbeitung eines virtuellen Werkstücks VWS mittels eines Bearbeitungsprogrammkomplexes 78 alle Prozesse in exakt derselben Zeitsynchronisation ablaufen zu lassen, wie auf der realen Werkzeugmaschine 10, ist dem Kernsteuerungsprogramm V38 eine virtuelle Zeitstufe 260 zugeordnet, welche einen Interpolatortaktgeber 262 zur Erzeugung eines virtuellen Interpolatortaktes VIT umfasst, sowie eine Zeiterfassungseinheit 264 zur Umrechung von durch die virtuellen Interpolatortakt erzeugten virtuellen Taktintervallen in Realzeitintervalle und somit Umrechnung der virtuellen Zeit VT in eine reale Zeit RT.

Die reale Zeit RT wird beispielsweise über das Bedienprogramm V80 im Anzeigefeld V100 des Bedienprogramms V80 ausgegeben.

Der Interpolatortaktgeber 262 der virtuellen Zeitstufe 260 ist in der Lage, einen virtuellen Interpolatortakt VIT zu generieren, bei welchem die Taktintervalle von den Taktintervallen des realen Interpolatortaktes IT abweichen, beispielsweise wesentlich größer sind als die Intervalle des realen Interpolatortaktes IT.

Da bei der virtuellen Aktionssteuerung V30 die Abarbeitung der NC-Sätze sowie die Interpolation einzelner Zwischenwerte auf der Basis des virtuellen Interpolatortaktes VIT erfolgt, lassen sich alle zeitlichen Abläufe in der virtuellen Aktionssteuerung V30 und somit auch die Aktionen der virtuellen Bearbeitungseinheiten V14 im selben Maße zeitlich verändern, wie die Intervalle des virtuellen Interpolatortaktes VIT relativ zu den Intervallen des realen Interpolatortaktes IT verlängert oder verkürzt sind.

Wenn nun die virtuelle Werkzeugmaschine V10 mit der Maschinensteuerung V20 die Bearbeitung eines virtuellen Werkstücks VWS mittels eines Bearbeitungsprogrammkomplexes 78 simuliert, so kann die Simulation auf der Basis des virtuellen Interpolatortaktes VIT des Interpolatortaktgebers 262 beispielsweise zeitlich verlangsamt durchgeführt werden, um der Bedienungsperson die Möglichkeit zu eröffnen, mögliche Kollisionen oder Beinahekollisionen exakt zu untersuchen, wobei bei dieser Untersuchung aufgrund des virtuellen Interpolatortaktes und der individuellen Anpassung des Maschinenmodells 240 sowie der Übernahme der individuellen Konfigurationsparameter die Bearbeitungseinheiten V14 sich im Wesentlichen in jedem Moment genau so relativ zueinander bewegen wie in der Realität.

Ferner schafft die Zeiterfassungsstufe 264 noch die Möglichkeit, aus der virtuellen Zeit VT unmittelbar direkt die reale Zeit RT zu ermitteln, so dass bei der Simulation der Bearbeitung eines virtuellen Werkstücks VWS mittels eines CNC-Bearbeitungsprogrammkomplexes sich nicht nur Kollisionen von Bearbeitungseinheiten V14 ermitteln lassen, sondern auch Satzlaufzeiten für die Abarbeitung von CNC-Sätzen oder sogar Stückzeiten des jeweiligen Werkstücks VWS, die aufgrund der Umrechnung der virtuellen Zeit VT in eine reale Zeit RT den Satzlaufzeiten Stückzeiten der Bearbeitung eines realen Werkstücks WS auf einer realen Werkzeugmaschine 10 entsprechen, so dass die virtuelle Werkzeugmaschine V10 bereits bei der Simulation eines CNC-Bearbeitungsprogrammkomplexes 78 auch Aussagen über die Satzlaufzeiten oder Stückzeiten und somit auch eine Optimierung der Stückzeiten ermöglicht. Hinsichtlich der Ausbildung des Werkzeugmodelliersystems 250 wurden im Zusammenhang mit der bisherigen Erläuterung der erfindungsgemäßen Lösung keine näheren Angaben gemacht.

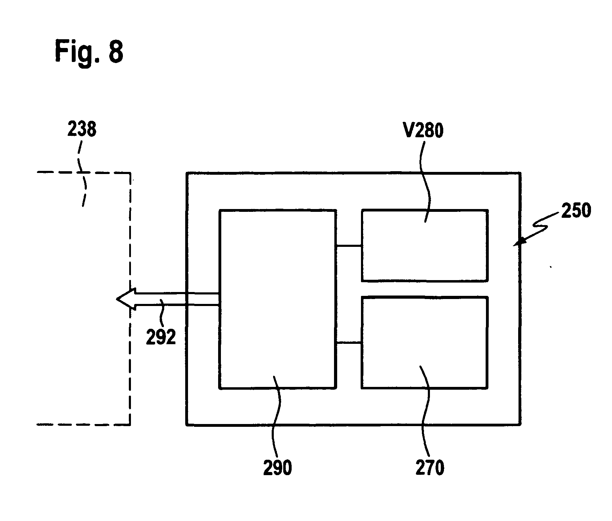

So sieht ein in Fig. 8 dargestelltes erstes vorteilhaftes Ausführungsbeispiel des Werkzeugmodelliersystems 250 vor, dass dieses ein Werkzeugmodell 270 aufweist, in welchem dreidimensionale Geometriedaten von Einzelkomponenten gespeichert sind, aus denen virtuelle Werkzeuge VWZ aufgebaut werden können.

Ferner umfasst das Werkzeugmodelliersystem 250 Werkzeugdaten V280, die Informationen über tatsächliche Abmessungen des virtuellen Werkzeugs VWZ enthalten, wobei diese tatsächlichen Abmessungen des virtuellen Werkzeugs VWZ für die Bearbeitung des virtuellen Werkstücks WS essentiell sind und von dem Kernsteuerungsprogramm V38 beim Abarbeiten der CNC-Sätze mitberücksichtigt werden sofern die Werkzeugdaten V280 zusammen mit dem CNC-Bearbeitungsprogrammkomplex 78 in dem für diese vorgesehenen Speicher V76 abgespeichert sind.

Ferner umfasst das Werkzeugmodelliersystem 250 noch einen Werkzeugkonfigurationsdatengenerator 290, welcher aus dem Werkzeugmodell 270 und den Werkzeugdaten V280 die Werkzeugkonfigurationsdaten 292 konfiguriert, welche dem Visualisierungsprogramm 238 übergeben werden, damit dieses im Zusammenhang mit der virtuellen Werkzeugmaschine V10 entsprechend den Werkzeugdaten V280 konfigurierte virtuelle Werkzeuge VWZ in die einzelnen Werkzeugpositionen der virtuellen Bearbeitungseinheiten V14 einsetzt.

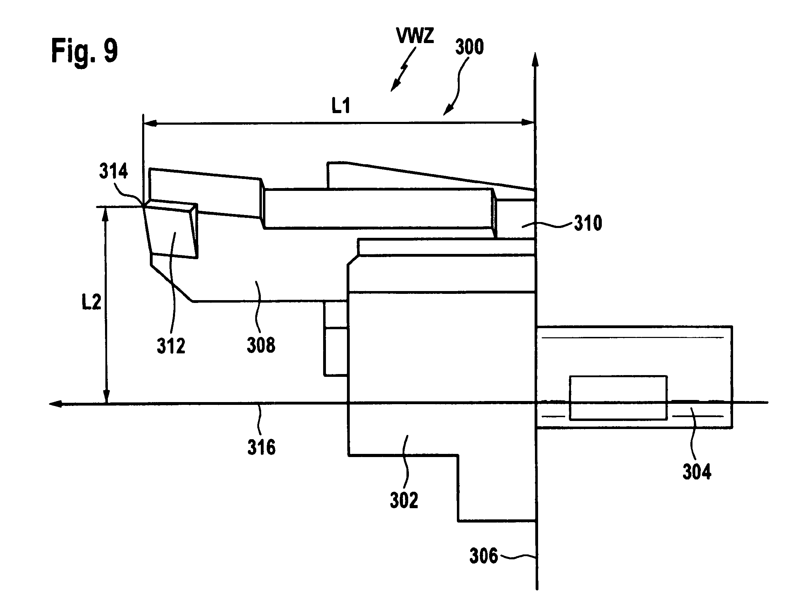

Ein derartiges virtuelles Werkzeug VWZ ist beispielhaft in Fig. 9 dargestellt, wobei es sich um ein sogenanntes dreidimensionales Geometriemodell handelt.

Ein derartiges virtuelles Werkzeug VWZ umfasst einen als Ganzes mit 300 bezeichneten und durch eine Werkzeugidentnummer identifizierbaren Werkzeughalter, welcher aus einem Werkzeughalterkörper 302 gebildet ist, der beispielsweise einen Halteschaft 304 aufweist, mit welchem der Werkzeughalterkörper 302 in einer Werkzeugaufnahme einer Bearbeitungseinheit V14 fixiert ist.

Ferner weist der Werkzeughalterkörper 302 eine Anlagefläche 306 auf, mit welcher dieser an eine Stützfläche der Bearbeitungseinheit V14, beispielsweise eines Werkzeugrevolvers oder eines anders gearteten Werkzeugträgers, anlegbar ist.

Das Halteelement 304 und der Werkzeughalterkörper 302 sind dabei fest miteinander verbunden und bilden eine zusammenhängende Einheit.

In den Werkzeughalterkörper 302 ist ein als Ganzes mit 308 bezeichneter Werkzeughalteschaft einsetzbar, wobei der Werkzeughalteschaft 308 in einer Aufnahme 310 des Werkzeughalterkörpers 302 in verschiedenen Positionen relativ zum Werkzeughalterkörper 302 montierbar ist.

Der Werkzeughalteschaft 308 trägt ein Schneidelement 312, beispielsweise eine Schneidplatte, deren Schneidenkante 314 für die spanabhebende Bearbeitung eingesetzt wird.

Für die Positionierung und Bewegung des virtuellen Werkzeugs VWZ mit dem Werkzeughalter 300 durch das Kernsteuerungsprogramm V38 sind im Wesentlichen zwei Maße der Schneidenkante 314 entscheidend, nämlich ein Längenmaß L1, welches die Position der Schneidenkante 314 über der Anlagefläche 306 angibt, sowie ein Längenmaß L2, welches die Position der Schneidenkante 314 relativ zu einer Achse 316 angibt, die senkrecht zur Anlagefläche 306 und mittig durch das Halteelement 304 verläuft.

Durch diese zwei Längenmaße L1 und L2 sind beispielsweise bei einer Schneidenkante 314 deren Positionen im Raum definiert, sofern noch zusätzlich die Einbauposition des Werkzeughalters 302 in die entsprechende Werkzeugaufnahme der Bearbeitungseinheit V14 festgelegt ist.

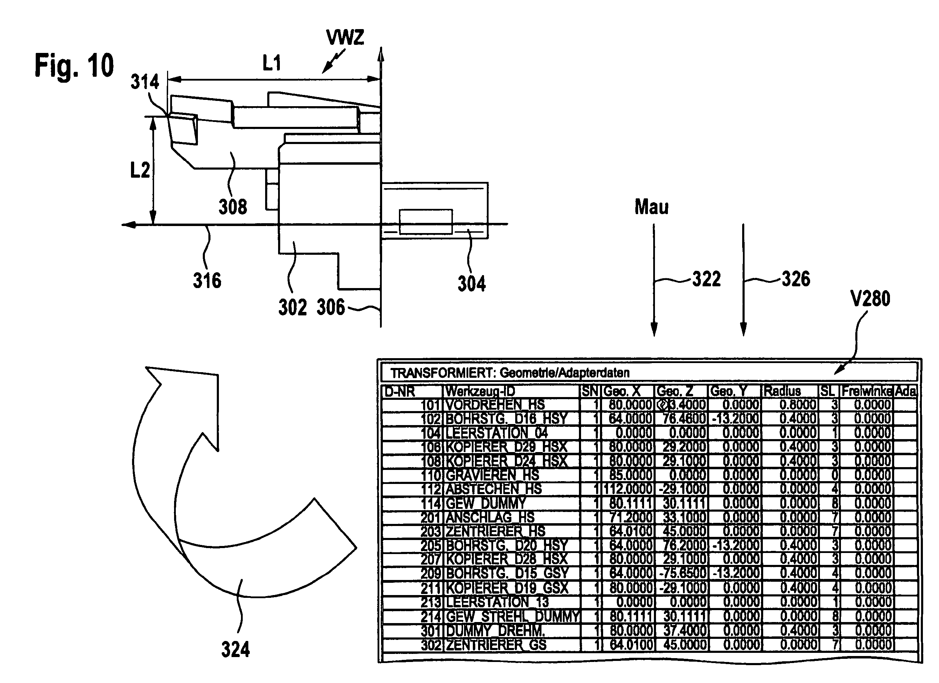

Im Fall des exemplarisch in Fig. 9 und 10 dargestellten Werkzeughalters 300 sind im Werkzeugmodell die dreidimensionalen Geometriedaten des Werkzeughalterkörpers 302 mit der Anlagefläche 306, und die des Werkzeughalteschafts 308 sowie die der Schneidplatte 312 abgelegt.

Ferner entsprechen die Längenmaße L1 und L2 den Werkzeugdaten V280 und der Werkzeugkonfigurationsdatengenerator 290 bildet aus den dreidimensionalen Geometriedaten des Werkzeughalterkörpers 302, des Werkzeughalteschafts 308, der Schneidplatte 312 und den Längenmaßen L1 und L2 die Werkzeugkonfigurationsdaten 292 des virtuellen Werkzeugs VWZ, welche dann dem Visualisierungsprogramm 238 übergeben werden.

Um ein derartiges generieren der Werkzeugkonfigurationsdaten 292 aktiv veranlassen zu können, ist die Bediensteuerung V180 mit einer Werkzeugfunktion V118 versehen, welche in einem Werkzeugdateneingabemodus V322 die Möglichkeit schafft, Werkzeugdaten V280 direkt durch Dateneingabe dem Werkzeugmodelliersystem 250 vorzugeben und dann in einem Werkzeuggeneriermodus 324 mit dem Werkzeugkonfigurationsdatengenerator 290 die Werkzeugkonfigurationsdaten 292 zu generieren, um das virtuelle Werkzeug VWZ mittels des Visualisierungsprogramms 238 auf dem Bildschirm 212 der Visualisierungseinheit 210 darstellen zu können.

Neben der manuellen Eingabe im Werkzeugdateneingabemodus V322 des Bedienprogramms V80 über die Maschinensteuertafel V90 besteht aber auch die Möglichkeit, im Werkzeugdatenübernahmemodus V326 eine Übernahme der Werkzeugdaten 280 aus dem Speicher V76 zu veranlassen, in welchem die Werkzeugdaten 280 zusammen mit dem CNC-Bearbeitungsprogrammkomplex 78 gespeichert sind und von welchem die Werkzeugdaten 280 dem Kernsteuerungsprogramm V38 zur Abarbeitung mit dem CNC-Bearbeitungsprogrammkomplex 78 zur Verfügung gestellt werden.

Die im Zusammenhang mit dem Bearbeitungsprogrammkomplex 78 gespeicherten Werkzeugdaten 280 entsprechen dann, wenn die Bedienungsperson an der realen Werkzeugmaschine 10 bereits die Werkzeuge WZ aufgebaut und an einem Messplatz vermessen hat, den realen Werkzeugdaten 280 und diese Werkzeugdaten 280 werden dann im Speicher 76 dem entsprechenden CNC-Bearbeitungsprogrammkomplex 78 zugeordnet.

Der Aufbau und die Vermessung der realen Werkzeuge WZ findet in den meisten Fällen unmittelbar vor der Bearbeitung eines realen Werkstücks WS in der realen Werkzeugmaschine 10 statt. Aus diesem Grund werden auch die Werkzeugdaten 280 der realen Werkzeuge an dem Messplatz unmittelbar vor der Bearbeitung des Werkstücks WS ermittelt und mit Werkzeugdateneingabemodus 322 der Werkzeugfunktion 118 des Bedienprogramms 80 im Speicher 76 dem Bearbeitungsprogrammkomplex 78 zugeordnet gespeichert.

Wird nun unmittelbar vor der Bearbeitung des realen Werkstücks WS nochmals eine Simulation des Bearbeitungsprogrammkomplexes 78 auf der virtuellen Werkzeugmaschine V10 durchgeführt, so werden neben dem Bearbeitungsprogrammkomplex 78 auch die realen Werkzeugdaten 280 über eine Schnittstelle 282 zwischen der Bediensteuerung 70 der Werkzeugmaschine 10 und der Bediensteuerung V70 der virtuellen Werkzeugmaschine V10 in den Speicher V76 übernommen.

Um zu erreichen, dass bei der Simulation der Bearbeitung eines virtuellen Werkstücks VWS die realen Werkzeugdaten 280 nicht nur in gleicher Weise wie bei der realen Werkzeugmaschine 10 durch das Kernsteuerungsprogramm V38 berücksichtigt werden, sondern auch bei der Generierung der Werkzeugkonfigurationsdaten 292, ermöglicht der Werkzeugdatenübernahmemodus V326 eine Übergabe der realen Werkzeugdaten 280 aus dem Speicher V76 in das Werkzeugmodelliersystem 250, so dass in diesem die realen Werkzeugdaten 280 vorliegen und zur Generierung der Werkzeugkonfigurationsdaten 292 herangezogen werden. Das heißt, dass die Eingabe der Werkzeugdaten 280 in das Werkzeugmodelliersystem 250 im Wege der Datenübernahme der realen Werkzeugdaten 280 aus dem Speicher V76 erfolgt und unmittelbar zur Generierung der Werkzeugkonfigurationsdaten 292 eingesetzt werden kann.

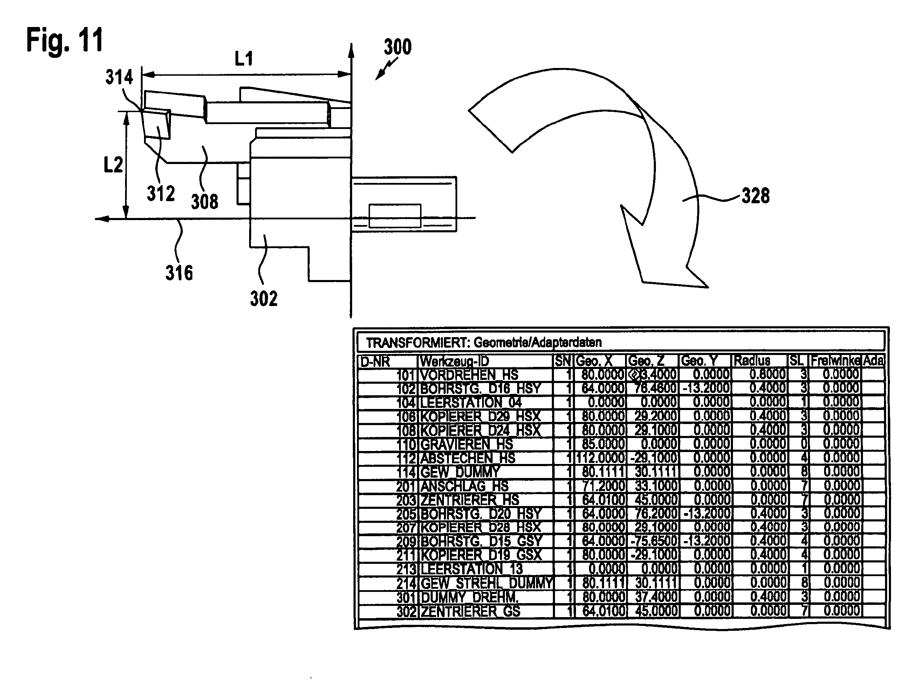

Alternativ dazu gibt es bei dem ersten Ausführungsbeispiel des erfindungsgemäßen Werkzeugmodelliersystems 250 noch die Möglichkeit, in einem Werkzeugdatengeneriermodus 328 (Fig. 11) der Werkzeugfunktion 118 zunächst basierend auf den dreidimensionalen Geometriedaten des Werkzeugmodells 270 die einzelnen Komponenten des Werkzeughalters 300, also beispielsweise den Werkzeughalterkörper 302, das Halteelement 304, den Werkzeughalteschaft 308 und die Schneidplatte 312 graphisch, beispielsweise auf dem Anzeigefeld V100 der Maschinensteuertafel V90 darzustellen und relativ zueinander zu positionieren, so dass allein durch manuelle Relativpositionierung des Werkzeughalterkörpers 302, des Werkzeughalteschafts 308 und der Schneidplatte 312 das virtuelle Werkzeug VWZ entsteht.

Zu diesem virtuellen Werkzeug VWZ existieren jedoch noch keine Werkzeugdaten, da diese der Bedienungsperson, die die einzelnen Komponenten grafisch relativ zueinander positioniert, nicht bekannt sind, so dass eine explizite Vermessung dieses virtuellen Werkzeugs VWZ erforderlich wäre.

Dies ist nicht notwendig bei Einsetzen des Werkzeugdatengeneriermodus 328, der aufgrund der Positionen der einzelnen Komponenten des Werkzeugs VWZ, also der relativen Positionen des Werkzeughalterkörpers 302, des Werkzeughalteschafts 308 und der Schneidplatte 312 die Werkzeugdaten V280 ermittelt und in dem Werkzeugmodelliersystem 250 ablegt (Fig. 11).

Die Werkzeugdaten V280 in dem Werkzeugmodelliersystem 250 können dann auch mit dem Werkzeugdatenübernahmemodus V326 von dem Werkzeugmodelliersystem 250 dem Speicher V76 übergeben und dem CNC-Bearbeitungsprogrammkomplex 78 zugeordnet werden, so dass auch das Kernsteuerungsprogramm V38 bei der Durchführung einer Simulation mit den Werkzeugdaten V280 arbeitet, die durch das Werkzeugmodelliersystem 250 mit dem Werkzeugdatengeneriermodus 328 generiert wurden und somit erfolgt auch die Steuerung der einzelnen Aktionen unter Berücksichtigung dieser virtuellen Werkzeugdaten V280.

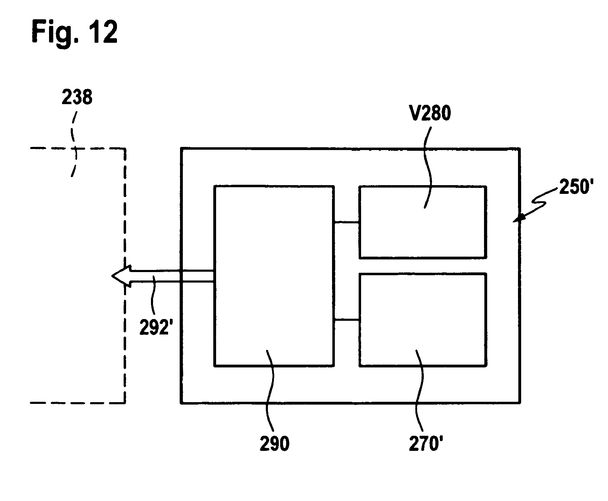

Bei einem weiteren Ausführungsbeispiel eines erfindungsgemäßen Werkzeugmodelliersystems 250', dargestellt in Fig. 12, umfasst das Werkzeugmodell 270' keine exakten Geometriedaten der einzelnen Komponenten zum Aufbau eines virtuellen Werkzeugs VWZ, sondern geometrische Volumenkörper, aus denen einzelne Volumenkörper ausgewählt und deren Abmessungen durch den Bediener eingegeben werden können.

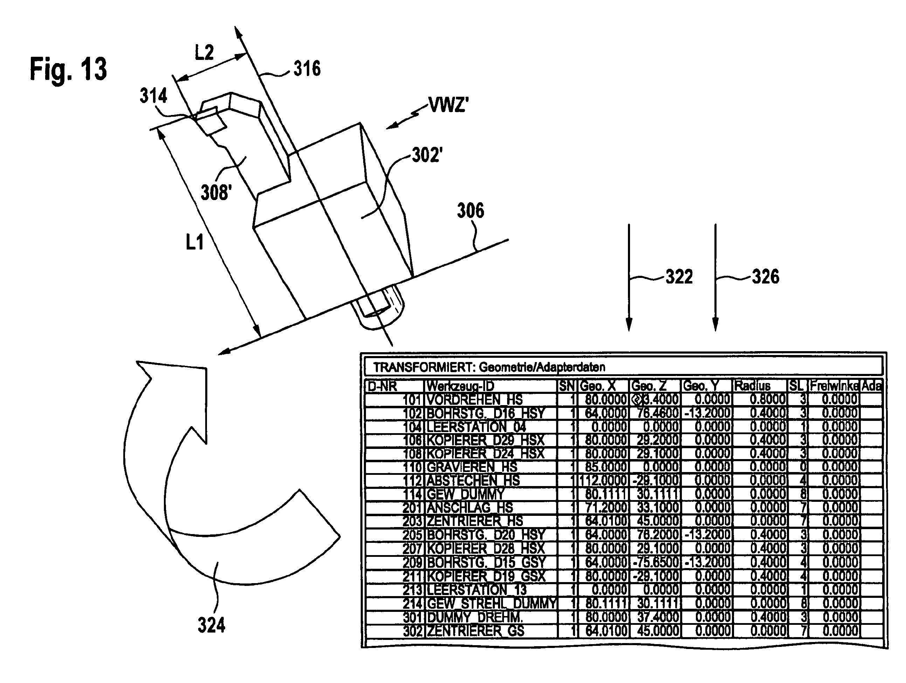

Unter Heranziehung der Werkzeugdaten V280 generiert somit der Werkzeugkonfigurationsdatengenerator 290 keine mit dem realen Werkzeug im Wesentlichen identischen Werkzeugkonfigurationsdaten 292, sondern Werkzeugkonfigurationsdaten 292', die ein virtuelles Werkzeug VWZ' ergeben, welches in den Werkzeugdaten, insbesondere den Längen L1 und L2 exakt ist, dessen Werkzeughalterkörper 302' und dessen Werkzeughalteschaft 308' jedoch signifikant von den tatsächlichen realen Verhältnissen abweichen können (Fig. 13).

Dennoch lassen sich mit einem derartigen Werkzeugmodelliersystem 250' zumindest näherungsweise richtige räumliche geometrische Verhältnisse auf dem Bildschirm 212 der Visualisierungseinheit 210 darstellen, die für die Überprüfung von Kollisionen geeignet sind.

Dabei können die Werkzeugdaten V280 auch bei diesem Ausführungsbeispiel auf demselben Wege eingegeben werden, wie im Zusammenhang mit dem ersten Ausführungsbeispiel dargestellt.

Dadurch dass - wie vorstehend beschrieben - die Simulation der Bearbeitung des virtuellen Werkstücks VWS mit den virtuellen Bearbeitungseinheiten auf dem erfindungsgemäßen Bedienerunterstützungssystem 200 mit hoher Aussagekraft bezüglich der realen Bearbeitung eines realen Werkstücks WS auf der Werkzeugmaschine 10 durchgeführt werden kann, eignet sich die Simulation auch zur laufenden Überwachung einer zum Beispiel erstmalig durchzuführenden Bearbeitung eines realen Werkstücks.

Das Bedienerunterstützungssystem 200 gemäß dem ersten Ausführungsbeispiel erlaubt es, beispielsweise parallel zur Bearbeitung eines realen Werkstücks WS auf der realen Werkzeugmaschine 10 in dem Bedienerunterstützungssystem 200 auf der virtuellen Maschine V10 eine Simulation desselben Bearbeitungsprogrammkomplexes 78 durchzuführen, das heißt eine Simulation einer Bearbeitung desselben virtuellen Werkstücks VWZ mit den virtuellen Bearbeitungseinheiten V14, wobei mit dem Visualisierungsprogramm 238 ein Kollisionserkennungsprogramm 340 verknüpft ist, das Kollisionen der virtuellen Bearbeitungseinheiten V14 untereinander und/oder mit dem Maschinenbett V12 erkennt, wobei in diesem Fall das Visualisierungsprogramm 238 einen Stoppbefehl 342 ausgibt, welcher unmittelbar auf das Antriebssystem 50 einwirkt und die reale Werkzeugmaschine 10 schnellstmöglich stillsetzt.

Erfolgt die Überprüfung der Aktionen der virtuellen Bearbeitungseinheiten V14 mit der nötigen Vorauseilung gegenüber den Aktionen der realen Bearbeitungseinheiten 14 der Werkzeugmaschine 10, so kann damit sichergestellt werden, dass das Stoppsignal 342 bei der Kollision virtueller Bearbeitungseinheiten V14 untereinander oder mit dem Maschinenbett V12 vor der tatsächlichen Kollision der realen Bearbeitungseinheiten 14 untereinander und/oder mit dem Maschinenbett 12 ausgegeben wird und zu einem Stopp der realen Werkzeugmaschine 10 vor der echten realen Kollision führt.

Diese Vorauseilung der Simulation der Bearbeitung des virtuellen Werkstücks VWS auf der virtuellen Werkzeugmaschine V10 kann dadurch sichergestellt werden, dass bei mit dem realen Kernsteuerungsprogramm 38 identischen Kernsteuerungsprogramm V38 die Prozessorleistung in der Aktionssteuerung V30 in dem Bedienerunterstützungssystem 200 höher ist als die Prozessorleistung in der Maschinensteuerung 20, so dass die Abarbeitung der CNC-Sätze des jeweiligen CNC-Bearbeitungsprogrammkomplexes 78 schneller durchgeführt wird als die Abarbeitung der CNC-Sätze in der Maschinensteuerung 20, so dass bei simultanem Start der Bearbeitung des realen Werkstücks WS und des virtuellen Werkstücks VWS stets rechtzeitig vor der realen Kollision der realen Bearbeitungseinheiten 14 untereinander oder mit dem Maschinengestell 12 das Stoppsignal 342 ausgegeben wird und die Aktionen der Bearbeitungseinheiten stoppt.

Das erfindungsgemäße Bedienerunterstützungssystem 200, das völlig separat und unabhängig von der Maschinensteuerung 20 arbeitet, ist mit der der Bediensteuerung V70 zugeordneten Datenverarbeitungseinheit V72 mit einem unternehmensinternen Datennetzwerk 350 gekoppelt, welches dem Bediener der Werkzeugmaschine 10 die Möglichkeit eröffnet, sich unmittelbar an der Werkzeugmaschine 10 zusätzliche Informationen aus dem unternehmensinternen Datennetzwerk 350 zu beschaffen, die für das Ausführen eines bestimmten Auftrages zur Bearbeitung von Werkstücken WS relevant sein können.

Beispielsweise ist das unternehmensinterne Datennetzwerk 350 so gestaltet, dass dieses die Möglichkeit eröffnet, Werkstückinformationen 352 zu beschaffen, die beispielsweise in einem CAM-System vorliegen. Diese Werkstückinformationen 352 können für die Bearbeitung des Werkstücks WS auf der realen Werkzeugmaschine, beispielsweise bei Bearbeitungsproblemen wesentlich sein.

Ein Benutzer der Werkzeugmaschine 10 hat nunmehr die Möglichkeit, durch das Bedienerunterstützungssystem 200 einerseits die Werkstückinformationen des CAM-Systems zu beschaffen und auf der Visualisierungseinheit 210 darzustellen, sei es im Anzeigefeld V100 oder in dem Bereich des Bildschirms 212, in dem üblicherweise die virtuellen Bearbeitungseinheiten V14 der virtuellen Werkzeugmaschine V10 dargestellt werden.

Damit kann der Bediener an der Werkzeugmaschine 10 Werkstückinformationen 352 studieren, während beispielsweise die Werkzeugmaschine 10 Werkstücke WS gesteuert durch die Maschinensteuerung 20, bearbeitet.

Beispielsweise können aber auch die Werkstückinformationen 352 dann relevant sein, wenn beim erstmaligen Bearbeiten des Werkstücks WS auf der Werkzeugmaschine 10 Probleme auftreten, seien es Probleme hinsichtlich des Werkstoffs oder der Maßhaltigkeit des Werkstücks beim Bearbeiten.

Für den Bediener der Werkzeugmaschine 10 kann es aber auch relevant sein, unmittelbar an der Werkzeugmaschine 10 Konstruktionsinformationen 354 vorliegen zu haben, beispielsweise Konstruktionsinformationen 354 eines CAD-Systems, die ebenfalls über das unternehmensinterne Datennetzwerk 350 zugänglich sind und ebenfalls in gleicher Weise wie die Werkstückinformationen 352 entweder im Anzeigefeld V100 oder in einem für die Darstellung der virtuellen Bearbeitungseinheiten V14 vorgesehenen Bereich des Bildschirms 212.

Alternativ oder ergänzend zu den Werkstückinformationen 352 und/oder den Konstruktionsinformationen 354 besteht aber auch bei der erfindungsgemäßen Lösung noch die Möglichkeit, über das unternehmensinterne Datennetzwerk 350 an der Werkzeugmaschine 10 Produktionsinformationen 356 zu studieren, was ebenfalls während der Bearbeitung eines Werkstücks WS auf der Werkzeugmaschine oder auch beim Einrichten der Werkzeugmaschine 10 relevant sein kann.

Schließlich besteht sogar noch die Möglichkeit, über das unternehmensinterne Datennetzwerk 350 Auftragsinformationen 358 dem Bediener an der Werkzeugmaschine 10 zur Verfügung zu stellen, die für diesen bei der Abwicklung eines Auftrags oder der Vorbereitung der Abwicklung eines Auftrags von erheblicher Bedeutung sein können.

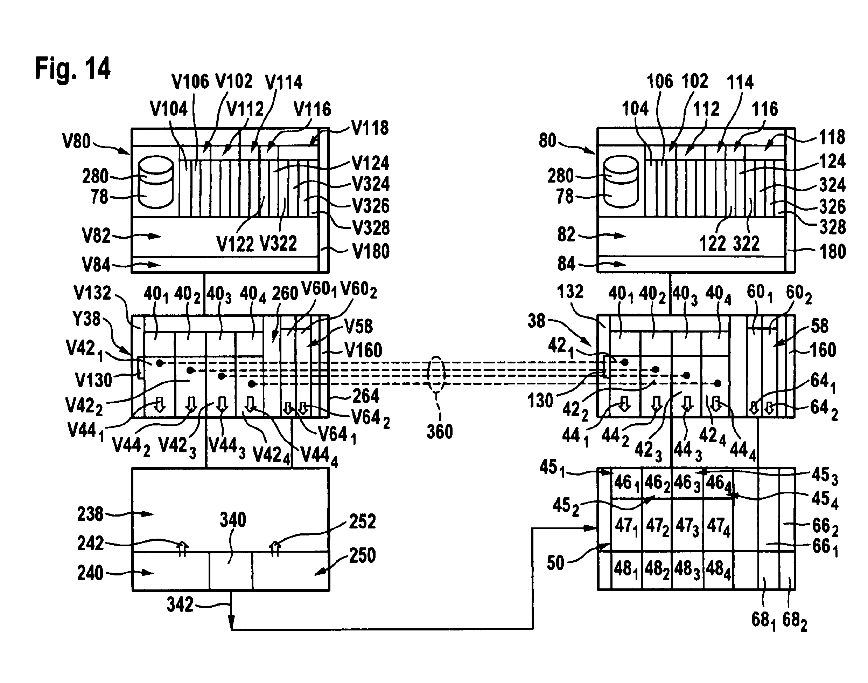

Bei einem zweiten Ausführungsbeispiel einer erfindungsgemäßen Werkzeugmaschine, dargestellt in Fig. 14, ist das Bedienerunterstützungssystem 200 mit der Maschinensteuerung 20 über eine echtzeitfähige Schnittstelle 360 gekoppelt, welche eine Datenübertragung zwischen dem Kernsteuerungsprogramm 38 der Maschinensteuerung 20 und dem Kernsteuerungsprogramm V38 des Bedienerunterstützungssystems 200 vorsieht, um Daten teilweise bearbeiteter CNC-Sätze in den einzelnen Kanälen 42 den einzelnen Kanälen V42 zu übertragen, so dass das Bedienerunterstützungssystem 200 keine von der Maschinensteuerung 20 unabhängige Simulation der Bearbeitung eines virtuellen Werkstücks durchführt, sondern eine Simulation der Bearbeitung eines virtuellen Werkstücks VWS, die parallel zu der Bearbeitung des realen Werkstücks WS erfolgt, wobei die Simulation mit teilweise seitens der Aktionssteuerung 30 in den einzelnen Kanälen 42 berechneten CNC-Sätzen arbeitet, wobei durch die echtzeitfähige Schnittstelle 360 die teilweise bearbeiteten CNC-Sätze von den Kanälen 42 direkt den Kanälen V42 übergeben werden und in den Kanälen V42 zu virtuellen Steuerbefehlen V44 weiterbearbeitet werden.

Mit den Steuerbefehlen V44 erfolgt dabei eine Steuerung der Bewegung der virtuellen Bearbeitungseinheiten V14 wie vorstehend im Zusammenhang mit der Simulation beschrieben.

Dabei ist das Visualisierungsprogramm 238 noch mit dem Kollisionsüberwachungsprogramm 340 versehen, welches selbsttätig Kollisionen der Bearbeitungseinheiten V14 untereinander oder auch mit dem Maschinenbett V12 überwacht.

Mit diesem Kollisionsüberwachungsprogramm 340 besteht die Möglichkeit, automatisch Kollisionen zu erkennen und beim Erkennen derselben durch das Visualisierungsprogramm 238 ein Stoppsignal 342 auszugeben, welches auf die Maschinensteuerung 20 der realen Werkzeugmaschine 10 das Antriebssystem 50 derselben unmittelbar einwirkt und die reale Werkzeugmaschine 10 sofort zum Stillstand bringt.

Eine derartige Kollisionsüberwachung durch das Bedienerunterstützungssystem 200 ist jedoch nur dann sinnvoll und effizient, wenn das Kollisionserkennungsprogramm 340 die mögliche Kollision rechtzeitig so lange vor der tatsächlichen Kollision auf der realen Werkzeugmaschine 10 erkennt, dass die reale Werkzeugmaschine 10 noch rechtzeitig gestoppt werden kann.

Aus diesem Grund arbeiten die Kanäle V42 im sogenannten Override-Modus, in welchem der gesamte Maschinenbetrieb, insbesondere die Beschleunigungen und Verfahrgeschwindigkeiten höher sind als in den Kanälen 42 der Maschinensteuerung 20.

Vorzugsweise beträgt im Override-Modus der virtuelle Override mehr als 100%, besser mehr als 500%, noch besser mehr als 1000% und vorteilhafterweise mehr als 2000%, so dass die vollständige Abarbeitung der CNC-Sätze in den Kanälen V42 so durchgeführt wird, als ob die Geschwindigkeiten um einen Faktor von mehr als 1, mehr als 5, mehr als 10, mehr als 20 und beispielsweise in der Größenordnung von ungefähr 40 größer sind als dies bei der Maschinensteuerung 20 der realen Werkzeugmaschine 10 der Fall ist. Damit lässt sich bei der Berechnung der Steuerbefehle V44 eine ausreichend große Vorauseilung gegenüber der Berechnung der Steuerbefehle 44 in der Maschinensteuerung 20 der realen Werkzeugmaschine 10 erreichen, um somit durch Überprüfen von Kollisionen der virtuellen Bearbeitungseinheiten V14 und des virtuellen Maschinenbetts V12 rechtzeitig eine Kollision der realen Bearbeitungseinheiten 14 und des Maschinenbetts 12 miteinander voraussehen zu können.

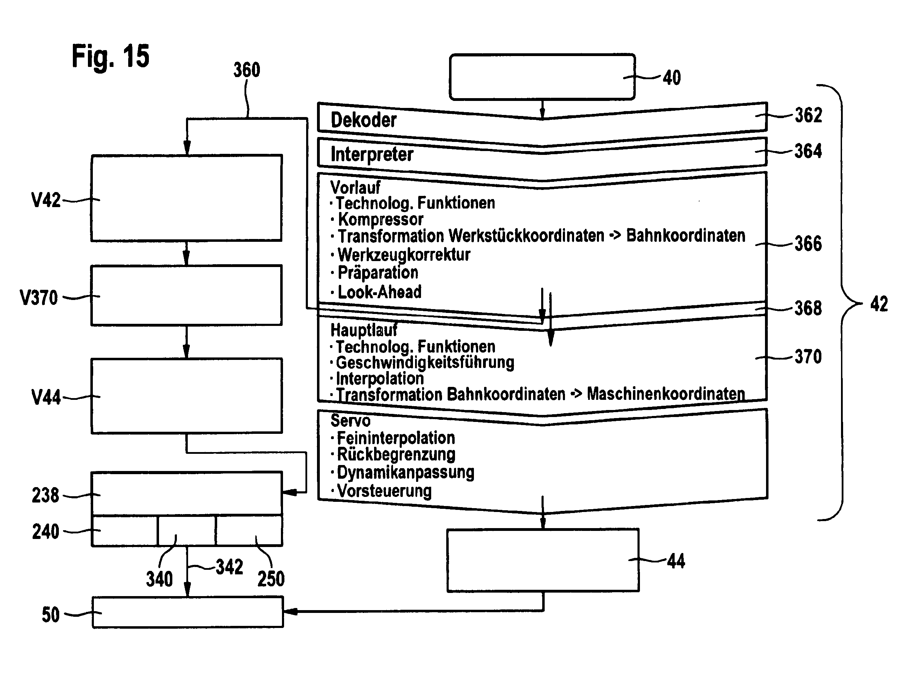

Bei dem beschriebenen zweiten Ausführungsbeispiel der erfindungsgemäßen Werkzeugmaschine wird vorteilhafterweise, wie in Fig. 15 dargestellt, im jeweiligen Kanal 42 der jeweilige CNC-Satz dem Dekoder 362 und dem Interpreter 364 einem sogenannten Vorlauf 366 übergeben, in welchem vorberechnete CNC-Sätze erstellt und in einem Speicher 368 sequentiell zwischengespeichert werden, bevor eine endgültige Abarbeitung der CNC-Sätze im Hauptlauf 370 erfolgt und schließlich die Steuerbefehle 44 ausgegeben werden.

Dabei erfolgt parallel zur Übergabe eines vorberechneten CNC-Satzes in den sequentiellen Speicher 368 eine Übergabe desselben über die Schnittstelle 360 in den entsprechenden Kanal V42 des Kernsteuerungsprogramms V38, in welchem dann ohne Zwischenspeicherung unmittelbar der Hauptlauf 370 unter Generierung der Steuerbefehle V44 erfolgen kann, wobei die Steuerbefehle V44 in bekannter Weise dem Visualisierungsprogramm V238 zur Verfügung gestellt werden, das dann mit dem Kollisionsüberwachungsprogramm 340 die Kollisionsüberwachung durchführt und gegebenenfalls das Stoppsignal 342 an das Antriebssystem 50 ausgibt, das bei Empfang des Stoppsignals 342 die Werkzeugmaschine 10 schnellstmöglich stillsetzt.

Die Tatsache, dass bei diesem zweiten Ausführungsbeispiel eine sofortige Abarbeitung der in Vorlauf 366 vorberechneten CNC-Sätze erfolgt, ermöglicht es bereits, dass die Simulation der Aktionen der virtuellen Bearbeitungseinheiten V14 mehrere CNC-Sätze vorauseilend gegenüber der Ermittlung der Steuerbefehle 44 in der Maschinensteuerung 20 erfolgt, wobei die Vorauseilung noch dadurch vergrößert wird, dass im virtuellen Hauptlauf V370 die Ermittlung der Steuerbefehle V44 im Override-Modus erfolgt.

Durch das zweite Ausführungsbeispiel gemäß Fig. 14 und Fig. 15 ist somit sichergestellt, dass stets parallellaufend zur Ansteuerung der realen Bearbeitungseinheiten 14 bei der Bearbeitung eines Werkstücks WS mit der erforderlichen Vorauseilung eine automatische Kollisionsüberwachung erfolgt, die bei Gefahr einer Kollision der Bearbeitungseinheiten 14 untereinander oder der Bearbeitungseinheiten 14 mit dem Maschinenbett 12 das Antriebssystem 50 stillsetzt und somit die Kollision verhindert.

Dadurch, dass das Bedienerunterstützungssystem 200 von der Maschinensteuerung 20 im Vorlauf 366 vorberechnete CNC-Sätze erhält, ist eine Aktivierung des Bedienerunterstützungssystems 200 und somit ein rechtzeitiger Start der Simulation der Bearbeitung eines virtuellen Werkstücks nicht erforderlich, da erst bei laufender Bearbeitung des Werkstücks WS auf der Ebene der Kanäle 42 und V42 vorberechnete CNC-Sätze übergeben werden, die dann automatisch in dem Bedienerunterstützungssystem 200 die Ermittlung der Steuerbefehle V44 mit Vorauseilung auslösen und dadurch die Kollisionsüberprüfung mit der jeweiligen Vorauseilung sicherstellen.

Ferner erlaubt die Tatsache, dass die CNC-Sätze im Vorlauf 366 des jeweiligen Kanals 42 vorausberechnet werden, sicherzustellen, dass - im Vergleich zum ersten Ausführungsbeispiel - die Rechenzeiten im Bedienerunterstützungssystem 200, insbesondere im Kanal V42 des Bedienerunterstützungssystem 200, einen geringen Einfluss auf die Abarbeitung der CNC-Sätze in dem Kanal V42 haben, da in diesem nur noch der weniger Rechenleistung benötigende Hauptlauf V370 durchzuführen ist, und folglich die erforderliche Vorauseilung aufgrund geringerer Prozessorleistung im Bedienerunterstützungssystem 200 im Regelfall aufrechterhalten werden kann.

## Patentansprüche

1. Werkzeugmaschine zum Bearbeiten von Werkstücken entsprechend einem CNC-Bearbeitungsprogrammkomplex (78) mittels Aktionen mindestens einer Bearbeitungseinheit (14), umfassend eine Maschinensteuerung (20), welche mit einem CNC-Sätze des CNC-Bearbeitungsprogrammkomplexes (78) verarbeitenden Steuerungsprogramm (38) Steuerbefehle (44) für Aktionen der mindestens einen Bearbeitungseinheit (14) ermittelt und welche mit diesen Steuerbefehlen (44) über eine Antriebssteuerung (45) einen Antrieb (48) der mindestens eine Bearbeitungseinheit (14) steuert,
**dadurch gekennzeichnet, dass** an der Werkzeugmaschine (10) zusätzlich zur Maschinensteuerung (20) ein Bedienerunterstützungssystem (200) angeordnet ist, dass das Bedienerunterstützungssystem (200) unabhängig von der Maschinensteuerung (20) arbeitet, dass das Bedienerunterstützungssystem (200) als Simulationssystem zur Darstellung von Aktionen von mindestens einer virtuellen Bearbeitungseinheiten (V14) einer virtuellen Werkzeugmaschine (V10) betreibbar ist, dass das Bedienerunterstützungssystem (200) vorauseilend zur Abarbeitung der CNC-Sätze des CNC-Bearbeitungsprogrammkomplexes (78) in der Maschinensteuerung (20) eine Simulation der Aktionen der virtuellen Bearbeitungseinheiten (V14) durch ein Simulationssystem ausführt, welches mit einem Kollisionserkennungsprogramm (340) zusammenwirkt und bei Erkennen einer Kollision ein Maschinenstoppsignal (342) auslöst, und dass das Bedienerunterstützungssystem (200) eine Visualisierungseinheit (210) zur Darstellung der Bearbeitungs- und/oder Werkstückinformation (352) aufweist, die an einer Maschinensteuereinheit (90) der Maschinensteuerung (20) angeordnet ist.

2. Werkzeugmaschine nach Anspruch 1, **dadurch gekennzeichnet, dass** das Bedienerunterstützungssystem (200) mit einem Datennetzwerk (350) verbunden ist, über welches Bearbeitungs- und/oder Werkstückinformationen (352) zugänglich sind

3. Werkzeugmaschine nach Anspruch 1 oder 2, **dadurch gekennzeichnet, dass** über das Netzwerk (350) Werkstückinformationen (352) eines CAM-Systems zugänglich sind.

4. Werkzeugmaschine nach einem der voranstehenden Ansprüche, **dadurch gekennzeichnet, dass** über das Datennetzwerk (350) Konstruktionsinformationen (354) zugänglich sind.

5. Werkzeugmaschine nach einem der voranstehenden Ansprüche, **dadurch gekennzeichnet, dass** das Bedienerunterstützungssystem (200) eine Bediensteuerung (V70) umfasst.

6. Werkzeugmaschine nach einem der voranstehenden Ansprüche, **dadurch gekennzeichnet, dass** zwischen dem Bedienerunterstützungssystem (200) und der Maschinensteuerung (20) über eine Schnittstelle (360) Daten austauschbar sind.

7. Werkzeugmaschine nach Anspruch 6, **dadurch gekennzeichnet, dass** zwischen dem Bedienerunterstützungssystem (200) und der Maschinensteuerung (20) CNC-Bearbeitungsprogrammkomplexe (78) austauschbar sind.

8. Werkzeugmaschine nach einem der voranstehenden Ansprüche, **dadurch gekennzeichnet, dass** zwischen dem Bedienerunterstützungssystem (200) und der Maschinensteuerung (20) eine Schnittstelle (360) existiert, über welche zumindest teilweise bearbeitete CNC-Sätze austauschbar ist.

9. Werkzeugmaschine nach Anspruch 8, **dadurch gekennzeichnet, dass** über die Schnittstelle (360) zwischen der Maschinensteuerung (20) und dem Bedienerunterstützungssystem (200) Ergebnisse der rechnerischen Bearbeitung von CNC-Sätzen im Kernsteuerungsprogramm (38) austauschbar sind.

10. Werkzeugmaschine nach einem der voranstehenden Ansprüche, **dadurch gekennzeichnet, dass** das Bedienerunterstützungssystem (200) eine Aktionssteuerung (30) umfasst, die mindestens eine Datenverarbeitungseinheit (32) aufweist, welche mit einem CNC-Sätze des CNC-Bearbeitungsprogrammkomplexes verarbeitenden Steuerungsprogramm (V38) die Steuerbefehle (V44) für Aktionen mindestens einer virtuellen Bearbeitungseinheit (V14) ermittelt.

11. Werkzeugmaschine nach einem der voranstehenden Ansprüche, **dadurch gekennzeichnet, dass** das Simulationssystem parallel zur Maschinensteuerung (20) arbeitet.

12. Verfahren zum Bearbeiten von Werkstücken entsprechend einem CNC-Bearbeitungsprogrammkomplex (78) mittels Aktionen mindestens einer Bearbeitungseinheit (14), bei welchem von einer Maschinensteuerung (20), mit einem CNC-Sätze des CNC-Bearbeitungsprogrammkomplexes (78) verarbeitenden Steuerungsprogramm (38) Steuerbefehle (44) für Aktionen der mindestens einen Bearbeitungseinheit (14) ermittelt werden und bei welchen mit diesen Steuerbefehlen (44) über eine Antriebssteuerung (45) ein Antrieb (48) der mindestens eine Bearbeitungseinheit (14) gesteuert wird,
**dadurch gekennzeichnet, dass** an der Werkzeugmaschine (10) ein Bedienerunterstützungssystem (200) vorgesehen wird, dass das Bedienerunterstützungssystem (200) unabhängig von der Maschinensteuerung (20) arbeitet, dass das Bedienerunterstützungssystem (200) als Simulationssystem zur Darstellung von Aktionen von mindestens einer virtuellen Bearbeitungseinheit (V14) einer virtuellen Werkzeugmaschine (V10) betrieben wird, dass in dem Bedienerunterstützungssystem (200) vorauseilend zur Abarbeitung der CNC-Sätze des CNC-Bearbeitungsprogrammkomplexes (78) eine Simulation der Aktionen der virtuellen Bearbeitungseinheiten (V14) zusammen mit einem Kollisionserkennungsprogramm (340) ausgeführt wird und bei Erkennen einer Kollision ein Maschinenstoppsignal (342) ausgelöst wird, und dass mit dem Bedienerunterstützungssystem (200) Bearbeitungs- und/oder Werkstückinformation (352) auf einer Visualisierungseinheit (210) dargestellt werden, die an einer Maschinensteuereinheit (90) der Maschinensteuerung (20) angeordnet ist.

13. Verfahren nach Anspruch 12, **dadurch gekennzeichnet, dass** zwischen dem Bedienerunterstützungssystem (200) und der Maschinensteuerung (20) eine Schnittstelle (360) existiert, über welche zumindest teilweise bearbeitete CNC-Sätze ausgetauscht werden können.

14. Verfahren nach Anspruch 12 oder 13, **dadurch gekennzeichnet, dass** bei Abarbeitung eines CNC-Satzes in der Maschinensteuerung (20) eine vorauseilende Abarbeitung dieses CNC-Satzes durch das Simulationssystem ausgelöst wird.

15. Verfahren nach einem der Ansprüche 12 bis 14, **dadurch gekennzeichnet, dass** das Bedienerunterstützungssystem (200) mit einem Datennetzwerk (350) verbunden wird, über welches Bearbeitungs- und/oder Werkstückinformationen (352) zugänglich sind.

## Claims

1. Machine tool for machining workpieces in accordance with a CNC machining programme complex (78) by way of actions of at least one machining unit (84), comprising a machine control (20) determining control commands (44) for actions of the at least one machining unit (14) with a control programme (38) processing CNC sets of the CNC machining programme complex (78) and controlling a drive (48) of the at least one machining unit (14) with these control commands (44) via a drive control (45),
**characterized in that** an operator support system (200) is arranged on the machine tool (10) in addition to the machine control (20), that the operator support system (200) operates independently of the machine control (20), that the operator support system (200) is operable as a simulation system for displaying actions of at least one virtual machining unit (V14) of a virtual machine tool (V10), that for the processing of the CNC sets of the CNC machining programme complex (78) in the machine control (20) the operator support system (200) pre-emptively performs a simulation of the actions of the virtual machining units (V14) by way of a simulation system interacting with a collision recognition programme (340) and triggering a machine stop signal (342) when a collision is detected, and that the operator support system (200) has a visualization unit (210) for displaying the machining and/or workpiece information (352), said visualization unit being arranged on a machine control unit (90) of the machine control (20).

2. Machine tool as defined in claim 1, **characterized in that** the operator support system (200) is connected to a data network (350), machining and/or workpiece information (352) being accessible via said data network.

3. Machine tool as defined in claim 1 or 2, **characterized in that** workpiece information (352) of a CAM system is accessible via the network (350).

4. Machine tool as defined in any one of the preceding claims, **characterized in that** construction information (354) is accessible via the data network (350).

5. Machine tool as defined in any one of the preceding claims, **characterized in that** the operator support system (200) comprises an operation control (V70).

6. Machine tool as defined in any one of the preceding claims, **characterized in that** data is interchangeable between the operator support system (200) and the machine control (20) via an interface (360).

7. Machine tool as defined in claim 6, **characterized in that** CNC machining programme complexes (78) are interchangeable between the operator support system (200) and the machine control (20).

8. Machine tool as defined in any one of the preceding claims, **characterized in that** an interface (360) exists between the operator support system (200) and the machine control (20), at least partially processed CNC sets being interchangeable via said interface.

9. Machine tool as defined in claim 8, **characterized in that** results of the arithmetical processing of CNC sets in the core control programme (38) are interchangeable between the machine control (20) and the operator support system (200) via the interface (360).

10. Machine tool as defined in any one of the preceding claims, **characterized in that** the operator support system (200) comprises an action control (30) having at least one data processing unit (32) determining the control commands (V44) for actions of at least one virtual machining unit (V14) with a control programme (V38) processing CNC sets of the CNC machining programme complex.

11. Machine tool as defined in any one of the preceding claims, **characterized in that** the simulation system operates parallel to the machine control (20).

12. Method for machining workpieces in accordance with a CNC machining programme complex (78) by way of actions of at least one machining unit (14), wherein control commands (44) for actions of the at least one machining unit (14) are determined by a machine control (20) with a control programme (38) processing CNC sets of the CNC machining programme complex (78) and wherein a drive (48) of the at least one machining unit (14) is controlled via a drive control (45) with these control commands (44),
**characterized in that** an operator support system (200) is provided on the machine tool (10), that the operator support system (200) operates independently of the machine control (20), that the operator support system (200) is operated as a simulation system for displaying actions of at least one virtual machining unit (V14) of a virtual machine tool (V10), that for the processing of the CNC sets of the CNC machining programme complex (78) a simulation of the actions of the virtual machining units (V14) is performed pre-emptively in the operator support system (200) together with a collision recognition programme (340) and a machine stop signal (342) is triggered when a collision is detected, and that machining and/or workpiece information (352) is displayed with the operator support system (200) on a visualization unit (210) arranged on a machine control unit (90) of the machine control (20).

13. Method as defined in claim 12, **characterized in that** an interface (360) exists between the operator support system (200) and the machine control (20), at least partially processed CNC sets being interchangeable via said interface.

14. Method as defined in claim 12 or 13, **characterized in that** a preemptive processing of a CNC set by the simulation system is triggered during processing of this CNC set in the machine control (20).

15. Method as defined in any one of claims 12 to 14, **characterized in that** the operator support system (200) is connected to a data network (350), machining and/or workpiece information (352) being accessible via said data network.

## Revendications

1. Machine-outil pour l'usinage de pièces selon un complexe de programmes d'usinage CNC (78) au moyen d'actions d'au moins une unité d'usinage (14), comprenant une commande de machine (20), qui détermine avec un programme de commande (38) traitant des ensembles CNC du complexe de programmes d'usinage CNC (78) des instructions de commande (44) pour des actions de ladite au moins une unité d'usinage (14) et qui commande avec ces instructions de commande (44), par l'intermédiaire d'une commande d'entraînement (45), un entraînement (48) de ladite au moins une unité d'usinage (14),
**caractérisée en ce qu'**un système de guide-opérateur (200) est disposé sur la machine-outil (10) en plus de la commande de machine (20), **en ce que** le système de guide-opérateur (200) travaille indépendamment de la commande de machine (20), **en ce que** le système de guide-opérateur (200) peut être utilisé comme système de simulation pour la représentation d'actions d'au moins une unité d'usinage virtuelle (V14) d'une machine-outil virtuelle (V10), **en ce que** le système de guide-opérateur (200) effectue, en avance par rapport à l'exécution des ensembles CNC du complexe de programmes d'usinage CNC (78) dans la commande de machine (20), une simulation des actions des unités d'usinage virtuelles (V14) au moyen d'un système de simulation, qui coopère avec un programme de reconnaissance de collision (340) et déclenche un signal d'arrêt de la machine (342) en cas de reconnaissance d'une collision, et **en ce que** le système de guide-opérateur (200) comprend une unité de visualisation (210) pour la représentation des informations (352) concernant l'usinage et/ou la pièce, qui est disposée sur une unité de commande de machine (90) de la commande de machine (20).

2. Machine-outil selon la revendication 1, **caractérisée en ce que** le système de guide-opérateur (200) est relié à un réseau de données (350), par lequel des informations (352) concernant l'usinage et/ou la pièce sont accessibles.

3. Machine-outil selon la revendication 1 ou 2, **caractérisée en ce que** des informations (352) concernant la pièce d'un système FAO sont accessibles via le réseau (350).

4. Machine-outil selon l'une quelconque des revendications précédentes, **caractérisée en ce que** des informations (354) concernant la construction sont accessibles via le réseau de données (350).

5. Machine-outil selon l'une quelconque des revendications précédentes, **caractérisée en ce que** le système de guide-opérateur (200) comprend une commande de conduite (V70).

6. Machine-outil selon l'une quelconque des revendications précédentes, **caractérisée en ce que** des données peuvent être échangées via une interface (360) entre le système de guide-opérateur (200) et la commande de machine (20).

7. Machine-outil selon la revendication 6, **caractérisée en ce que** des complexes de programmes d'usinage CNC (78) peuvent être échangés entre le système de guide-opérateur (200) et la commande de machine (20).

8. Machine-outil selon l'une quelconque des revendications précédentes, **caractérisée en ce qu'**il existe entre le système de guide-opérateur (200) et la commande de machine (20) une interface (360), par laquelle des ensembles CNC au moins partiellement traités peuvent être échangés.

9. Machine-outil selon la revendication 8, **caractérisée en ce que** des résultats du traitement numérique d'ensembles CNC dans le programme de commande central (38) peuvent être échangés par l'interface (360) entre la commande de machine (20) et le système de guide-opérateur (200).

10. Machine-outil selon l'une quelconque des revendications précédentes, **caractérisée en ce que** le système de guide-opérateur (200) comprend une commande d'actions (30), qui comporte au moins une unité de traitement de données (32), qui détermine, avec un programme de commande (V38) traitant des ensembles CNC du complexe de programmes d'usinage CNC, les instructions de commande (V44) pour des actions d'au moins une unité d'usinage virtuelle (V14).

11. Machine-outil selon l'une quelconque des revendications précédentes, **caractérisée en ce que** le système de simulation travaille parallèlement à la commande de machine (20).

12. Procédé pour l'usinage de pièces selon un complexe de programmes d'usinage CNC (78) au moyen d'actions d'au moins une unité d'usinage (14), dans lequel on détermine par une commande de machine (20), avec un programme de commande (38) traitant des ensembles CNC du complexe de programmes d'usinage CNC (78), des instructions de commande (44) pour des actions de ladite au moins une unité d'usinage (14) et dans lequel on commande avec ces instructions de commande (44), via une commande d'entraînement (45), un entraînement (48) de ladite au moins une unité d'usinage (14), **caractérisé en ce qu'**un système de guide-opérateur (200) est prévu sur la machine-outil (10), **en ce que** le système de guide-opérateur (200) travaille indépendamment de la commande de machine (20), **en ce que** l'on utilise le système de guide-opérateur (200) comme système de simulation pour la représentation d'actions d'au moins une unité d'usinage virtuelle (V14) d'une machine-outil virtuelle (V10), **en ce que** l'on effectue dans le système de guide-opérateur (200), en avance par rapport à l'exécution des ensembles CNC du complexe de programmes d'usinage CNC (78), une simulation des actions des unités d'usinage virtuelles (V14) de concert avec un programme de reconnaissance de collision (340) et on déclenche un signal d'arrêt de la machine (342) en cas de reconnaissance d'une collision, et **en ce que** l'on représente avec le système de guide-opérateur (200) des informations (352) concernant l'usinage et/ou la pièce sur une unité de visualisation (210), qui est disposée sur une unité de commande de machine (90) de la commande de machine (20).

13. Procédé selon la revendication 12, **caractérisé en ce qu'**il existe entre le système de guide-opérateur (200) et la commande de machine (20) une interface (360), par laquelle des ensembles CNC au moins partiellement traités peuvent être échangés.

14. Procédé selon la revendication 12 ou 13, **caractérisé en ce que**, lors de l'exécution d'un ensemble CNC dans la commande de machine (20), on déclenche une exécution en avance de cet ensemble CNC par le système de simulation.

15. Procédé selon l'une quelconque des revendications 12 à 14, **caractérisé en ce que** l'on relie le système de guide-opérateur (200) à un réseau de données (350), par lequel des informations (352) concernant l'usinage et/ou la pièce sont accessibles.
